## Europäisches Patentamt

## European Patent Office

## Office européen des brevets

(11) Publication number: **0 016 756**
**B1**

(12) **EUROPEAN PATENT SPECIFICATION**

(45) Date of publication of patent specification: **03.07.85**

(21) Application number: **79900097.1**

(22) Date of filing: **28.12.78**

(86) International application number:
**PCT/US78/00254**

(87) International publication number:
**WO 79/00449 26.07.79 Gazette 79/15**

(51) Int. Cl.⁴: **H 05 B 37/02, H 05 B 39/04, H 05 B 39/06, H 05 B 41/04, H 05 B 41/18, G 05 F 1/10**

(54) **CIRCUIT FOR ENERGISING A GAS DISCHARGE LAMP.**

(30) Priority: **28.12.77 US 865209**
**07.09.78 US 940435**
**11.12.78 US 968372**
**27.12.78 US 973617**
**27.12.78 US 973613**

(43) Date of publication of application:
**15.10.80 Bulletin 80/21**

(45) Publication of the grant of the patent:
**03.07.85 Bulletin 85/27**

(84) Designated Contracting States:
**CH DE FR GB LU SE**

(56) References cited:
**US-A-3 414 766**
**US-A-3 486 070**
**US-A-3 906 302**

(73) Proprietor: **DATAPOWER, INC.**
**3328 W. 1st Street**
**Santa Ana, CA 92703 (US)**

(72) Inventor: **GERHARD, Francis, Henry**
**31891 Paseo Terraza**
**San Juan Capistrano, CA 92675 (US)**
Inventor: **FELPER, Gerald, Allen**
**2722 E. Carnival Avenue**
**Anaheim, CA 92806 (US)**
Inventor: **NELSON, Alan, H.**
**23365 Sky View Court**
**Los Gatos, CA 95030 (US)**
Inventor: **HANDLER, Howard (NMI)**
**9511 Robin Avenue**
**Westminster, CA 92683 (US)**

(74) Representative: **Jones, Colin et al**
**W.P. THOMPSON & CO. Coopers Building**
**Church Street**
**Liverpool L1 3AB (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to apparatus for operating a gas discharge lamp, such as a fluorescent lamp, a mercury vapour lamp, a sodium lamp, or a metal halide lamp. The invention relates more particularly to a circuit for energising a gas discharge lamp having electromagnetic means for storing magnetic energy connected in parallel combination with the electrodes of the gas discharge lamp, switch means for connecting a power supply to the parallel combination and control means for controlling the switch means so that current from the source flows in one direction through the lamp when the switch means is in its on state and flows from the electromagnetic means in the opposite direction through the lamp when the switch means is in its off state, the control means including a current sensing device for sensing the current flowing through said parallel combination and being constructed to actuate the switch means responsively to the current sensed by sensing device to interrupt the connection of the power supply to the parallel combination for a predetermined length of time whenever the current flowing from the power supply to the parallel combination has increased to a predetermined value.

Such a circuit is known from US—A—3906302 and obviates the need for the usual heavy and expensive series ballast devices of earlier control circuits. It has a single switching element to switch periodically the direction of current flow through the lamp to reduce the deterioration or erosion of the lamp electrodes and to ensure a high enough frequency of switching, such as 20 kHz, to reduce the requirement for the size of the ballast.

US—A—3906302 discloses the use of a resistor as a current sensing device, this resistor being in series with a transistor, which serves as the switching element, so that a voltage tapped from this resistor provides a measure of the current flowing through the parallel combination of the lamp and an inductor, which serves as the electromagnetic means, when the switch means is on. This voltage is fed to a control device which is said to influence the on-time of the transistor. The inductance of the inductor is chosen such that the product of the current in one direction and the duration of that current is maintained substantially equal to the product of the current in the other direction and the duration of the current flow in that other direction. It is therefore not possible to vary the lamp intensity.

US—A—3,486,070 discloses a control circuit for maintaining the input power of a vapor discharge lamp. A switch, a current measuring resistor, an inductor and the vapor discharge lamp are connected in series and a reverse-directed diode is connected across the series combination of the lamp and the inductor. The lamp and the inductor receive current from a source when the switch is closed and the lamp receives current from the inductor via the diode when the switch is open. The switch is opened for a predetermined length of time when the current in the resistor reaches a predetermined maximum value. By this means, the power to the lamp can be kept substantially constant. But, because the lamp is in series with the inductor, the current through the lamp is always in the one direction, thereby leading to unequal electrode wear and shortened lamp life. Also, this patent does not disclose any means whereby the light intensity may be varied.

An object of this invention is to provide a circuit for energising a gas discharge lamp that enables the intensity of the lamp to be varied.

According to the present invention, the control means is constructed to trigger the switch means to its off state responsively to the said predetermined current value being reached and to return the switch means to its on state upon the elapse of a fixed length of time, and the control means includes means (23) for varying said predetermined current value at which the control means is triggered for varying the intensity of the light from the lamp.

The electromagnetic means may be an inductor or choke coil and the switch means may be a transistor. One side of the inductor is connected to a power source and the other side is connected to the collector of the transistor. The emitter of the transistor is connected to one end of a resistor which forms part of the control means, and the other end of the resistor is connected to ground. The base of the transistor is connected to the output of a monostable or one-shot multivibrator, also forming part of the control means. The input to the one-shot multivibrator is connected to the output of a comparator amplifier. The multivibrator operates in such a way that, when the input to the multivibrator is high, the multivibrator is triggered and its output goes low for the said fixed length of time, after which its output returns to the high state. The two inputs to the comparator amplifier are connected in such a way that one input is connected to the emitter of the transistor and the other input is connected to a selectively or automatically variable reference voltage source. The circuit components and the time delay of the multivibrator are chosen in such a way as to provide a relatively high rate of switching on the base of the transistor, approximately 20 to 40 kHz.

The alternating current flowing through the gas discharge lamp has no direct current component. As a result, the useful life of the lamp is increased by maximizing the life of the electrodes since a direct current component of lamp current causes excessive cathodic heating of one of the two electrodes and reduces the life of that electrode.

It is a significant advantage that the intensity of the lamp may be varied by varying the reference voltage at the input of the comparator amplifier. In one embodiment, this function is provided by a potentiometer connected between the reference voltage and the input to the comparator amplifier. In another embodiment, a photo-conductive

**0 016 756**

resistor is used in the voltage dividing input circuit to the comparator amplifier to vary automatically the light intensity of the gas discharge lamp in response to the ambient light intensity.

Several lamps, instead of just one gas discharge lamp, may be used with no increase in the ignition voltage of the circuit. In order to ignite such lamps in sequence, for example in the case of two lamps, a capacitor is connected in parallel with one of the lamps. This capaciator acts to short out one lamp while the other lamp is ignited. After the other lamp is ignited, substantially all of the ignition voltage supplied by the coil will appear across the one lamp, and cause the one lamp to ignite. After the one lamp is ignited, the lamp impedances become low compared with that of the capacitor and the latter is therefore effectively taken out of the circuit.

A Zener diode, metal oxide varistor, or similar device can be connected across the transistor collector and ground. This varistor protects the transistor from transient surges in electrical power in the circuit by shorting out any transient voltages which exceed the magnitude of the breakdown voltage of the varistor.

A low voltage power supply suitable for powering the one-shot multivibrator and the comparator amplifier as well as supplying the reference voltage to the input of the comparator amplifier can be supplied by a stepdown transformer having as its primary winding the choke coil or inductor connected in parallel with the gas discharge lamp. A diode is connected between the secondary winding and a capacitor. The low side of the secondary winding and the other side of the capacitor are connected to ground. The polarity of this diode is such that the voltage supplied to the capacitor is independent of the transient voltage which occurs in the inductor during periods when the transistor is turned off.

The electrodes of the gas discharge tube can be preheated prior to ignition, thereby extending the useful life of the gas discharge tube. This can be accomplished by connecting one of the lamp electrodes across a minor portion of the high side of the choke winding. The other electrode is connected across a minor portion of the low side of the choke winding. This will ensure that a small current flows through both electrodes just before the lamp is ignited, allowing the electrodes to warm up to a temperature closer to the temperature achieved after ignition of the lamp.

The prior art lamp control circuits typically operate from a DC source, either from batteries or from a rectified and filtered AC source. In the latter instance, the filtering required results in a poor power factor, making the circuits unacceptable in certain applications.

This problem can be solved by connecting one of the two inputs to the comparator amplifier to the emitter of the transistor and the other input connected to the AC power supply. The circuit components and the time delay of the multivibrator are chosen in such a way as to provide a relatively high rate of switching on the base of the transistor, approximately 20 to 40 kHz. The current of the lamp is thereby varied precisely in relation to the AC line voltage, so that the power factor of the circuit is high.

A secondary winding can be provided on the inductor for charging a capacitor through a diode. This capacitor is connected to the rectified AC power line by a further diode. When the AC power voltage crosses zero volts, that is, when the rectified AC voltage is near its null point, the further diode becomes forward biased, and the charge on the capacitor prohibits the voltage on the power line from nulling. Because a gas discharge lamp increases in resistance at a power voltage null, the capacitor used to prohibit nulling avoids this high resistance load characteristic, and thus protects the solid state switching device.

A low voltage power supply suitable for powering the one-shot multivibrator and comparator amplifier may be supplied by a second step-down transformer having as its primary winding the inductor or choke coil connected in parallel with the gas discharge lamp.

Another problem with prior art circuits has been that the fly back voltage during current reversal required to ignite the lamp when the circuit is first activated must be large enough to generate a sufficiently strong voltage gradient in the lamp to ionize the gas. This causes a large voltage to appear across the switching device which can damage the device during ignition, thereby limiting the reliability of the control circuit.

A further problem has been that it is often necessary to reduce the voltage supplied to the circuit in order to ensure that only the optimum lamp voltage is supplied to the lamp. It has been found that such a reduction in supply voltage decreases the voltage gradient in the lamp for starting ignition of the lamp during current reversal. Therefore, with the introduction of a step down auto transformer, the fly back voltage of the circuit must be increased to provide a sufficient voltage gradient in the lamp. Such an increase in fly back voltage increases the wear in components in the circuit and a consequent loss of reliability.

These problems can be solved by connecting one electrode of a gas discharge lamp to the tapped output of a step down auto transformer also acting as the inductor. One end of the auto transformer is connected to a rectified power source and the other end is connected directly to the collector of the transistor switch and to the other electrode of the gas discharge lamp. A starter aid conductor is mounted adjacent the lamp and connected to the power supply return.

By this means, the voltage gradient in the lamp during ignition may be maximized without regard to the step down ratio of the auto transformer, while the fly back voltage required for the lamp ignition may be decreased. This reduces the fly back voltage across the transistor and therefore enhances the reliability of the circuit, while permitting the use of an auto transformer with any desired step down ratio.

Yet another problem encountered in the prior art has been that the illumination intensity of the lamp for a given amount of power consumed is maximized only if the switching device operates to provide a symmetrical voltage wave for the lamp. Typically, the magnitude of the voltage supplied the lamp determines the shape of the voltage wave form supplied to the lamp. As a result, in general, there is a specific voltage which must be supplied through the circuit to the lamp in order to provide a symmetrical voltage wave form. For a high intensity mercury vapor lamp connected to a control circuit having a single switching element, a voltage supplied to the lamp of approximately 130 volts DC when warmed up, or 20 volts DC when cold, has now been found to result in a symmetrical wave form. The problem of maximizing the efficiency of the lamp by providing a fixed supply voltage which ensures a symmetrical voltage wave form in the lamp is compounded because, if the control circuit is designed to provide the requisite 130-volt DC value for a symmetrical voltage wave form in the lamp after warm up, then the time required to warm up the lamp after initial turn-on would be extended to become excessively long, and it is even possible that the lamp, after initial turn-on, would never reach its normal operative mode.

Another problem is that, even though the control circuit may be designed to apply the requisite voltage to ensure a symmetrical voltage wave form in the lamp, the requisite voltage may change during the life of the lamp due to change in-lamp characteristics, and is different from lamp to lamp due to manufacturing tolerance variations. Furthermore, changes in lamp characteristics may result in a change in load impedance presented to the power supply, which may cause a change in the voltage output of the power supply, further complicating the task of attempting to supply the requisite voltage required to ensure a symmetrical voltage wave form in the lamp. Furthermore, power loss in the power supply itself occurs if the power supply input impedance is reactive. Finally even if the power supply is designed to provide the requisite voltage to the lamp for corresponding to a symmetrical voltage wave form in the lamp, variations in the voltage in the power line supplying power to the power supply may cause the power supply to vary its voltage output from the desired requisite voltage.

The foregoing problems are solved by using a supply voltage feedback control loop including a power oscillator and a symmetry detector to control the voltage supplied to the control circuit so that it is maintained at a value which causes the on-time of the transistor to equal its off-time, resulting in a symmetrical voltage wave form supplied to the lamp, maximizing the efficiency of the lamp. In order to prevent variations in lamp intensity caused by variations in power line voltage, a reference voltage feedback control loop can be used to control the reference voltage supplied to one input of the comparator amplifier, which minimizes variations in lamp intensity due to variations in power line voltage. The reference voltage can be controlled by the user in order to vary lamp intensity in a desired manner. The supply voltage control feedback loop and the reference voltage control feedback loop are combined in a voltage regulator which is connected between the lamp control circuit and a constant current source providing 60-Hertz alternating current. The voltage regulator provides further improvements in the efficient use of power by the lamp and its associated apparatus by presenting an input impedance to a 60-Hertz power source which is non-reactive, a feature facilitated by the power oscillator of the supply voltage feedback control loop. A shut-down circuit is provided to temporarily shut down the voltage regulator before the occurrence of an over-voltage condition in order to protect certain components in the circuit.

The advantage is that the supply voltage feedback control loop will always assure a symmetrical voltage wave form supplied to the lamp even if lamp characteristics change during the life of the lamp and even if different lamps are substituted having different characteristics, without necessitating any changes in the parameters of the components of the voltage regulator and control circuit. Thus, the efficient use of power for a given illumination intensity in the lamp is maximized because the voltage wave form supplied to the lamp is constrained to be symmetrical and because the voltage regulator presents an average input impedance to the power line which is non-reactive, thereby substantially eliminating reactive power losses in the voltage regulator.

The problem of igniting the lamp becomes particularly acute when a high intensity high pressure gas discharge lamp is used, since such lamps require very high ignition voltages.

One solution to the problem of providing a high voltage to ignite the lamp is to use a step-up voltage transformer connected to a capacitive discharge device which provides sufficient voltage for a short period of time to ionize the lamp without requiring the flyback voltage of the control circuit to be large. However, this creates further problems because the step-up transformer must be connected in series with the lamp, and, after the lamp circuit has assumed normal operation, the large winding ratio of the transformer will cause significant current to flow in the primary winding with consequent power losses. This additional problem may be alleviated by opening up the primary winding after the lamp has ignited. However, this creates further problems because the secondary winding of the step-up transformer now acts as a second inductor in the lamp control circuit, impeding current flow through the lamp during flyback and further increasing the flyback voltage across the switching device, which may damage the switching device.

Another problem in the prior art has been that, when a high pressure sodium lamp is used with the lamp control circuit, its resistance is well known to increase during the life of the lamps, which increases power consumption of the circuit, and decreases the efficiency of the lamp circuit.

These problems can be solved by connecting the secondary winding of a step-up pulse transformer in series with the lamp, its primary winding being driven by a capacitive discharge circuit. This combination provides very high ignition voltage to the lamp. Additional means are provided to prevent the inductance of the secondary winding from affecting the operation of the lamp circuit after the lamp is ignited and the lamp circuit is operating in its normal mode. To this end, a rectifier diode is connected across the secondary winding of the step-up transformer and has its polarity oriented so that it provides an alternative current path when the switching device causes the voltage in the lamp control circuit to fly back. The operation of the multivibrator in the lamp control circuit can be delayed after power is first applied in order to permit the capacitive discharge device to become fully charged.

The power consumed by the lamp control circuit can be made independent of the effective lamp control circuit independent of the effective lamp resistance. This is accomplished by providing another transformer having its primary winding connected in series with the lamp and its secondary winding wound to an opposite polarity to provide a voltage proportional to the lamp current but of opposite polarity. This opposite polarity voltage is applied to one input of the comparator amplifier. As a result, the comparator amplifier senses only the voltage drop caused by the current through the primary winding of the inductor. Thus, the lamp current does not affect the operation of the comparator amplifier, and thus the comparator amplifier is permitted to control current through the lamp circuit independently of the actual current to the lamp. This renders the power consumption of the circuit independent of effective lamp resistance.

Brief description of the drawings

The invention will be described in detail with reference to the accompanying drawings in which:

Figure 1 illustrates a preferred embodiment of a control circuit for a gas discharge lamp shown in simplified form for facilitating an understanding of the overall function of the control apparatus;

Figure 2 illustrates a modified form of the circuit of Figure 1, in which the modification provides for automatically controlling the intensity of the lamp in response to variation in the intensity of the ambient illumination;

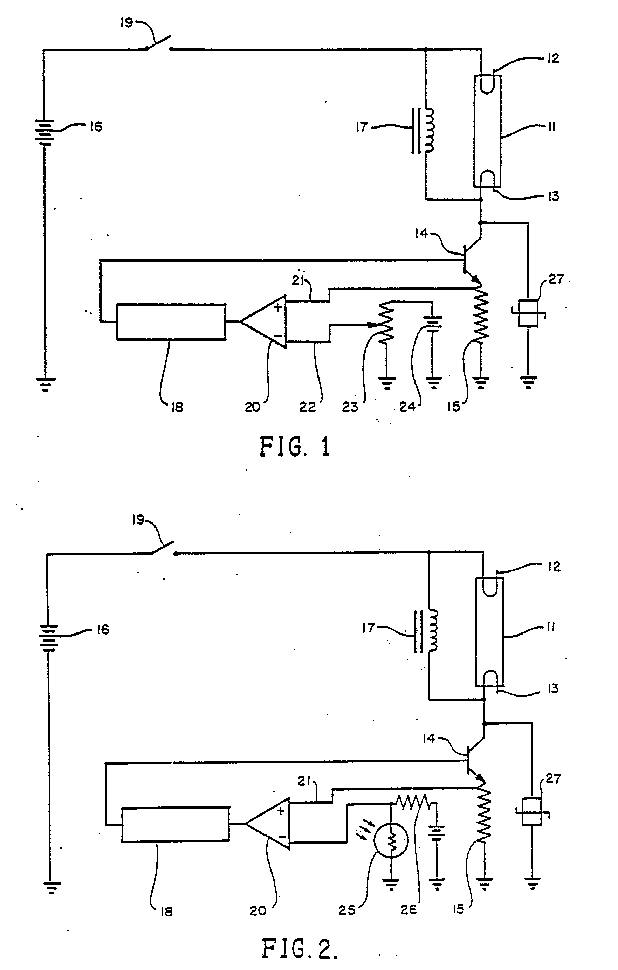

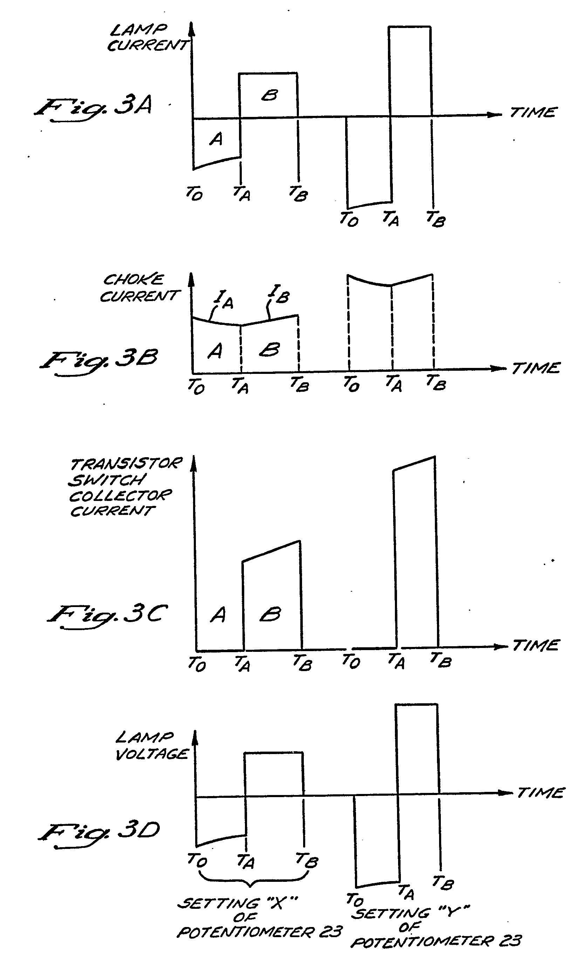

Figure 3 shows four waveform plots labeled 3A, 3B, 3C, and 3D which are characteristic of the control circuit illustrated in Figure 1. Figure 3A is a plot of the current through the gas discharge lamp as a function of time. Figure 3B is a plot of the current through the choke or inductor as a function of time, Figure 3C is a plot of the collector current of the transistor as a function of time, and Figure 3D is a plot of the voltage across the gas discharge lamp as a function of time. In all of these plots, time is plotted on the horizontal axis and the voltage or current is plotted on the vertical axis;

Figure 4 illustrates another modified form of the invention in which a single control circuit is effective to control a pair of gas discharge lamps connected in series;

Figure 5 illustrates another modified form of the invention in which the choke or inductor windings are used as the primary windings of a step-down transformer which supplies power for the one-shot multivibrator and the comparator amplifier as well as the reference voltage to the input of the comparator amplifier. Figure 5 also illustrates the use of the primary coil as an auto transformer to supply current to the electrodes of the gas discharge lamp as a source of preheating current prior to ignition of the lamp;

Figure 6 illustrates a detailed circuit schematic including provision for (a) a step-down voltage supply to the lamp for matching the line voltage to the optimal lamps operating voltage and (b) a thermistor connected between the two inputs to the differential amplifier for sensing the temperature of the varistor device and protecting the varistor and transistor from destructive effects of transient power surges in the circuit;

Figure 7 illustrates another modified form of the invention in which the reference voltage for the comparator circuit is derived directly from the output of a bridge which supplies the circuit with rectified AC power;

Figure 8 shows two waveform plots labeled 8A and 8B, which are characteristic of the control circuit illustrated in Figure 7. Figure 8A is a plot of the current drawn by the lamp circuit from the full-wave rectifier showing both the instantaneous current levels and the average current level. Figure 8B is a plot of the current, both instantaneous and average, drawn by the full-wave rectifier from the power line;

Figure 9 illustrates a modified form of the circuit of Figure 7 in which a capacitor is charged by a secondary winding on the lamp ballast and is utilized to prohibit the output of the rectifying bridge from reaching a null so that the lamp will not exhibit high resistance characteristics;

Figure 10 is a detailed circuit diagram, similar to the circuit of Figure 6, but implementing in that circuit the additional features illustrated in the schematic circuit of Figure 9;

Figure 11 shows three waveform plots labeled 11A, 11B and 11C, which are characteristic of the control circuit illustrated in Figure 10. Figure 11A is a plot of the line voltage supplied to that circuit. Figure 11B is a plot of the voltage at the output of the rectifying bridge and Figure 11C is a plot of the current drawn from the power lines by the circuit of Figure 10;

Figure 12 illustrates a detailed circuit schematic including provision for (a) a step down voltage supply to the lamp for matching the line voltage to the optimal lamp operating voltage and (b) a starting aid adjacent the gas discharge lamp;

Figure 13 illustrates the preferred embodiment of this invention in which the connection of the gas discharge lamp and the connection of the starter aid maximizes the starting voltage supplied to the lamp;

Figure 14 is a schematic illustration of the progressive ionization of the gas in the gas discharge lamp during start up;

Figure 15 is a schematic diagram of an embodiment of this invention which includes a symmetry regulated supply voltage feedback control loop;

Figure 16 illustrates time domain plots of the choke current and lamp voltage wave forms, similar to the wave forms of Figures 3B and 3D, respectively, and showing by way of comparison the effect of the introduction of the symmetry regulated feedback control loop of Figure 15, in which:

Figure 16A is a time domain plot of the choke current for setting "X" of potentiometer 23, corresponding to the plot of Figure 3B,

Figure 16B is a time domain plot of the choke current corresponding to the setting "X" of potentiometer 23, but which is symmetry regulated,

Figure 16C is a time domain plot of the choke current for a setting "Y" of potentiometer 23 corresponding to the plot of Figure 3B,

Figure 16D is a time domain plot of the choke current corresponding to the setting "Y" of potentiometer 23, but which is symmetry regulated.

Figure 16E is a time domain plot of the symmetry regulated lamp voltage wave form corresponding to the symmetry regulated choke current wave form of Figure 16B, and

Figure 16F is a time domain plot of the symmetry regulated lamp voltage wave form corresponding to the symmetry regulated choke current wave form of Figure 16D;

Figure 17 is a schematic diagram of another embodiment of this invention including the symmetry regulated control loop of Figure 15 and further including a selective current regulating control loop and a protective shut-down circuit;

Figure 18 is a schematic diagram of the quasi divider circuit used in the circuit illustrated in Figure 17;

Figure 19 is a schematic diagram of the current converter and power oscillator of the circuit of Fig. 17;

Figure 20 includes time domain plots of various voltage and current wave forms in the circuit illustrated in Figure 19 wherein:

Figure 20A is a time domain plot of the wave form of the input current $I_N$ at the input to the current converter of Figure 19,

Figure 20B is a time domain plot of the voltage $V_C$ at the return terminal of the diode bridge of the current convertor of Figure 19,

Figure 20C is a time domain plot of the rectified voltage $V_D$ at the output of the diode bridge of Figure 19,

Figure 20D is a plot of the total current output of the diode bridge of Figure 19, and

Figure 20E is a time domain plot of the input voltage across the diode bridge of Figure 19;

Figure 21 includes time domain plots of voltage and current wave forms in the power oscillator of Figure 19, wherein:

Figure 21A is a time domain plot of the input current $I_N$ similar to the plot of Figure 20A, but having its time scale considerably expanded,

Figure 21B is a time domain plot of the collector voltage across the oscillator transistor of Figure 19,

Figure 21C includes superimposed plots of $V_{720}$, the 20 kHz voltage in the power oscillator of Figure 19 $V_{620}$, the 60-Hertz output voltage at the output of the diode bridge of Figure 19, and $V_D$, the total voltage at the output of the diode bridge of Figure 19 including the 20-kHz ripple voltage superimposed upon the 60-Hertz output voltage,

Figure 21D is a time domain plot of the voltage $V_A$ at the negative input to the comparator amplifier of Figure 19, and $V_B$, the positive feedback to the comparator amplifier of Figure 19,

Figure 21E is a time domain plot of $I_{620}$, the current through the snubbing capacitor at the diode bridge output of Figure 19, and of $I_{615}$, the current through the inductor of Figure 19,

Figure 21F is a time domain plot of the current through the power oscillator transistor of Figure 19,

Figure 21G is a time domain plot of the current through the output diode of the power oscillator of Figure 19;

Figure 22 is a schematic diagram of a voltage regulator which includes the current converter of Figure 19;

Figure 23 is an overall schematic block diagram of the preferred embodiment of control circuit including the symmetry regulated control loop of Figure 15, the current regulator control loop of Figure 17, a protective shut-down circuit similar to that illustrated in Figure 17, and the voltage regulator of Figure 22;

Figure 24 is a detailed schematic layout diagram of the circuit of Figure 23 and is split into two parts labelled 24A and 24B;

Figure 25 is a block diagram of the shut-down protective circuit of Figures 23 and 24;

Figure 26 is a schematic diagram of a lamp control circuit similar to that of Figure 1, but including a step-up transformer having its secondary winding connected in series with the lamp and its primary winding connected to a capacitive discharge device, in which the inductance of the secondary winding interferes with the normal operation of the lamp control circuit;

Figure 27 is a simplified schematic diagram of one embodiment of this invention including a step-up transformer having its secondary winding connected in series with the lamp and its primary winding connected to a comparative discharge device and further including means preventing the inductance of the secondary winding from interfering with the normal operation of the lamp control circuit;

Figure 28 is a schematic diagram of another embodiment of this invention in which a transformer having one of its windings connected in series with the lamp facilitates regulation of the current consumption of the lamp control circuit independently of the effective lamp resistance; and

Figure 29 is an overall detailed schematic diagram of the preferred embodiment of the control circuit of the invention including the features of Figures 27 and 28.

Description of the preferred embodiment
(A) Variation of lamp intensity

Referring to the circuit illustrated in Figure 1, a gas discharge lamp 11, typically a low-pressure mercury vapor fluorescent lamp, having two electrodes 12 and 13, has its electrodes 13 connected to an electronic switch shown as an NPN transistor 14, the collector of which is connected to electrode 13, and the emitter of which is connected to a resistor 15. The other end of the resistor 15 is connected to ground. The other electrode 12 of the gas discharge lamp 11 is connected to a DC power supply. This supply will normally be a rectified AC source but is shown for simplicity in this figure as a battery 16 whose positive terminal is connected through on-off switch 19 to electrode 12 and whose negative terminal is connected to ground. A choke or inductor 17 is connected in parallel with the electrodes 12 and 13, of the gas discharge lamp 11.

The base of the NPN transistor switch 14 is connected to the output of a one-shot multivibrator 18. The monostable multivibrator operates in such a way that when the input to the multivibrator is low its output is high, and when its input is high, the monostable multivibrator is triggered such that its output goes into the low state for a predetermined fixed length of time, after which the output of the multivibrator returns to the high state. The input of the multivibrator is connected to the output of a comparator amplifier 20. The positive input of the comparator amplifier is connected through a conductor 21 to the emitter of the NPN transistor 14, and the negative input of the comparator amplifier is connected through a conductor 22 to a potentiometer 23. Potentiometer 23 is connected to the positive end of a DC power source 24, and the negative end of the DC power source 24 is connected to ground.

The operation of the circuit of Figure 1 is as follows. When the switch 19 is first closed, the current passes through the switch 19 and through the inductor 17. No current passes through the gas discharge lamp 11 because, until it is ignited by high voltage, the lamp remains nonconductive. The current through the inductor passes through the NPN transistor switch 14 and through the resistor 15 to ground. The current through the inductor 17 rises as a function of time until it reaches a level at which the voltage drop across the resistor 15 exceeds the voltage on the conductor 22. The voltage on the conductor 22 is determined by the potentiometer 23. When the voltage drop across the resistor 15 exceeds the voltage on the conductor 22, the comparator amplifier 20 senses a positive difference between its inputs and the output of the comparator amplifier 20 changes from the low to the high state. In response to the high output of the comparator amplifier 20, the one-shot multivibrator 18, is triggered and provides a low output for a short predetermined fixed length of time. Thus, the transistor switch 14 will be turned off for the short period of time during which the base of the transistor receives a low level signal from the multivibrator 18. The magnetic field in the choke 17 then collapses, resulting in a voltage potential across the electrodes 12 and 13 of the gas discharge lamp 11. This potential is sufficient to ignite the lamp and the lamp begins to conduct current.

After the above-mentioned short predetermined fixed length of time, the one-shot multivibrator output returns to its normally high level state, thereby turning the transistor switch 14 back on. At this instant in time, current begins to flow from the source 16 through the electrodes 12 and 13 of the gas discharge lamp 11 in the opposite direction to the current supplied before the choke 17. The magnetic field in the choke 17 also begins to build up again as does the current through the choke 17. This results in a rise in the collector current of the transistor 14 and an equal rise in current through the resistor 15. This rise in current will cause the voltage drop across resistor 15 to rise until the conductor 21 again exceeds the voltage on conductor 22. Again, the comparator amplifier 20 will give a high output when this condition is reached, causing the output of the multivibrator 18 to go into the low state for the fixed period of time thereby turning off the collector current of the transistor 14. The magnetic field in the choke 17 will collapse at this time, thereby causing a current to flow between the electrodes 12 and 13 of the gas discharge lamp 11 in a direction opposite to the direction traveled by the current when the transistor 14 was on. This condition will continue until the multivibrator output returns automatically to the high state.

As may be seen from this description, this process will continue to repeat itself as the transistor 14 continuously is switched on and off until steady state conditions are achieved. One or more cycles of operation may be required to ionize the lamp and cause it to ignite.

A varistor or high voltage zener diode 27 is connected between the collector of the NPN transistor and ground, and serves to protect the transistor 14 from destructive breakdown in the event of lamp failure causing an open circuit between its terminals, or inadvertent unplugging of the lamp when the power switch 19 is closed. When the lamp itself is defective and causes an open circuit or when the lamp is removed, the voltage rise at the collector of transistor 14 produced by collapse of the magnetic field in the inductor 17 will be limited to the breakdown voltage of the varistor, a value selected to be withing the safe limits of the collector-base junction of the transistor switch 14.

A significant feature of this circuit is that the varistor 27 serves the additional function of preventing ignition of the lamp until the lamp electrodes have been warmed up over a time period which is long compared to the operating period of the control circuit. Thus, the control circuit, without the varistor, would typically supply on the order of 1000 volts across the lamp in the fly back mode. Such high voltage applied to the lamp filaments when they are cold would be extremely deleterious since the electrodes would undergo a very high rate of change of temperature. The varistor is selected such that it breaks down for voltages exceeding 500 to 600 volts. At these lower voltages, the lamp 11 will not ignite until after the cathodes have been heated. Typically, a time delay of 3/4 second to one second is the amount of time needed to heat up the cathodes sufficiently for the lamp to ignite when supplied with 500 to 600 volts.

Figures 3A, 3B, 3C and 3D are plots of the steady state response characteristics of the circuit for two different levels of input power to the gas discharge lamp.

Figure 3A is a plot of a single cycle of current through the gas discharge lamp as a function of time. The current is plotted on the vertical axis and the time is plotted on the horizontal axis. It will be understood that the current alternates through the lamp in a repetitive cycle. In the region of Figure 3A, denoted "A", the transistor switch 14 is in the off state and the collapsing field in the inductor 17 is forcing a current through the gas discharge lamp. The region A covers a period of time between time $T_O$ and time $T_A$. This time period is equal to the unstable period of multivibrator 18. In the region in Figure 3A denoted "B", the transistor switch 14 is on. The region B lies between the time $T_A$ and the time $T_B$, after which the cycle repeats itself.

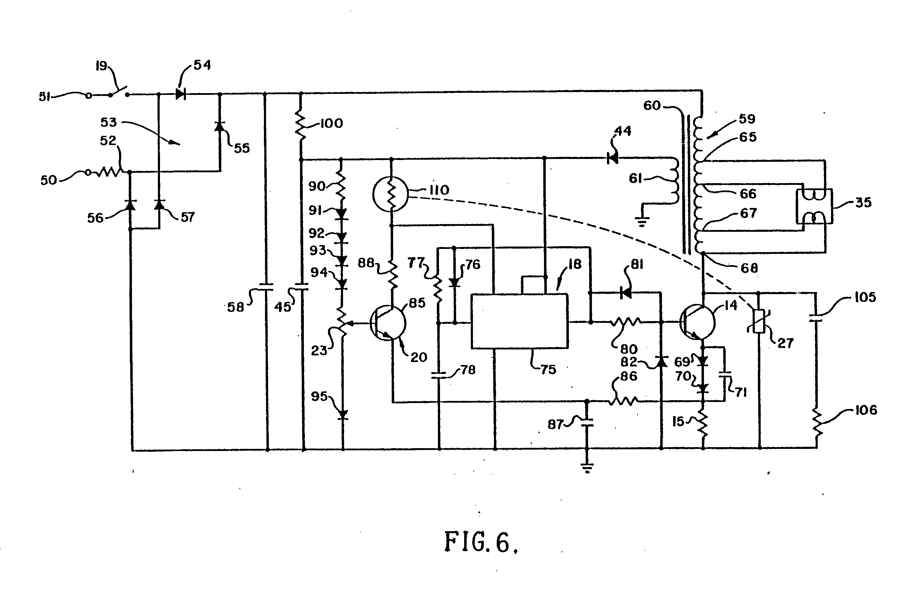

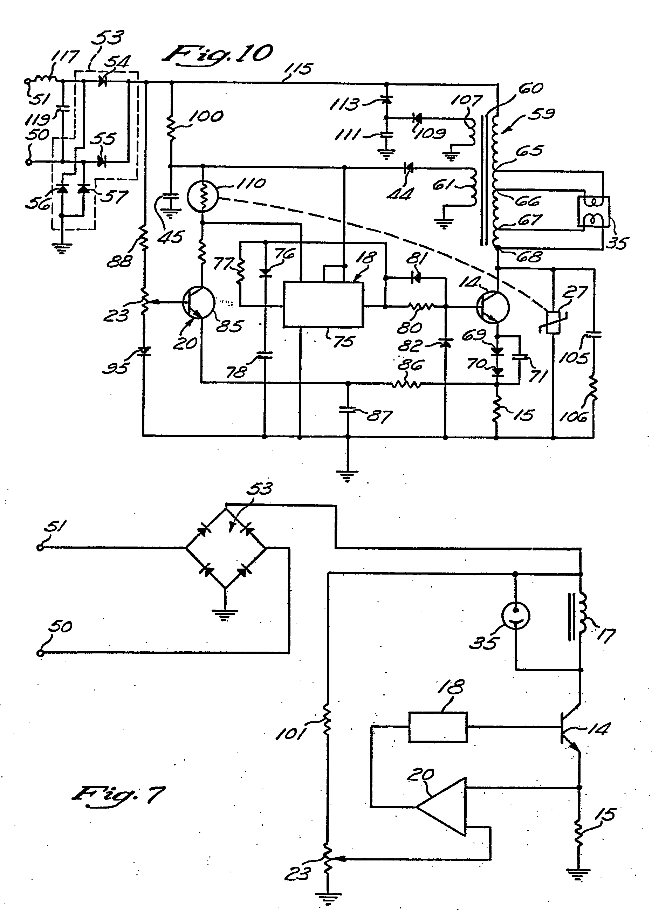

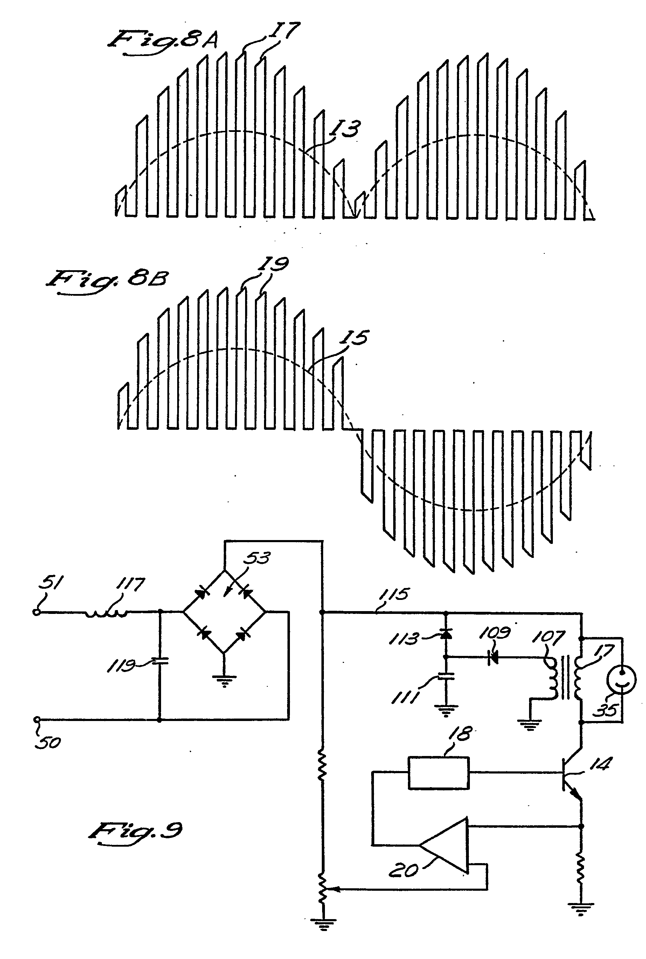

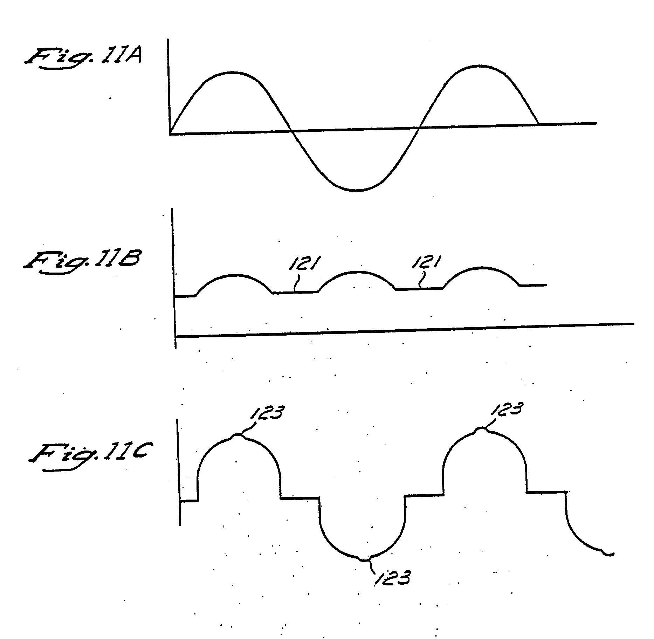

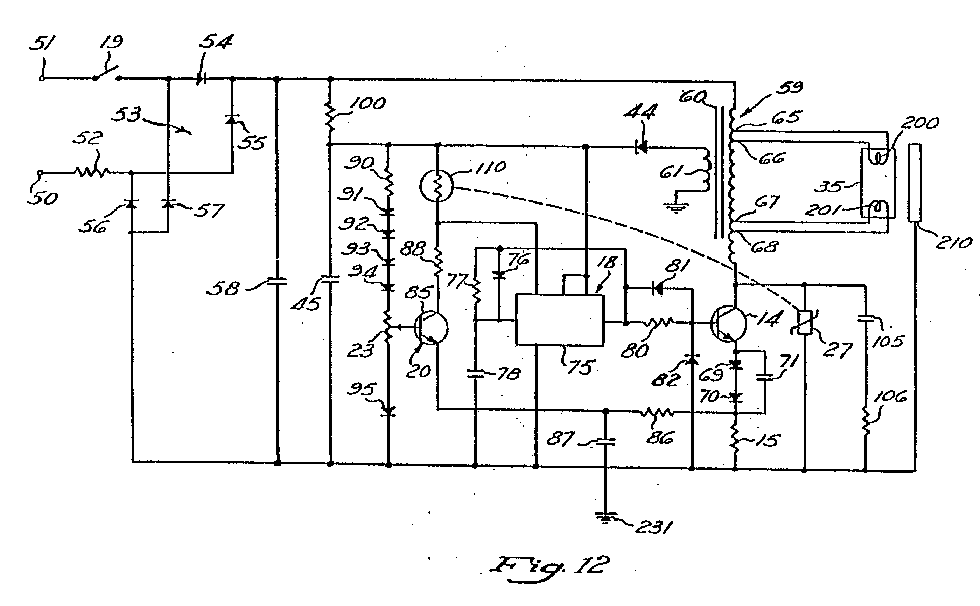

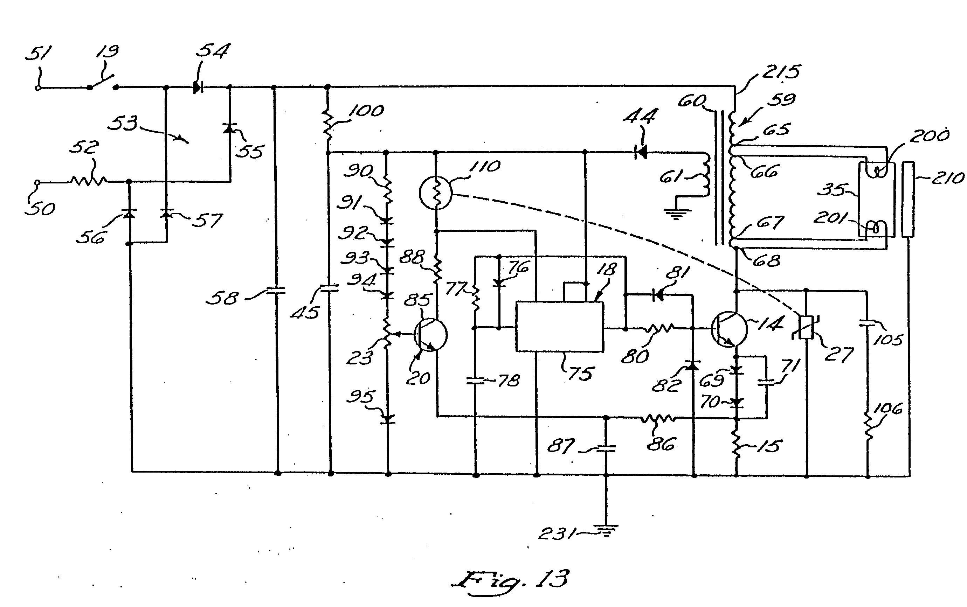

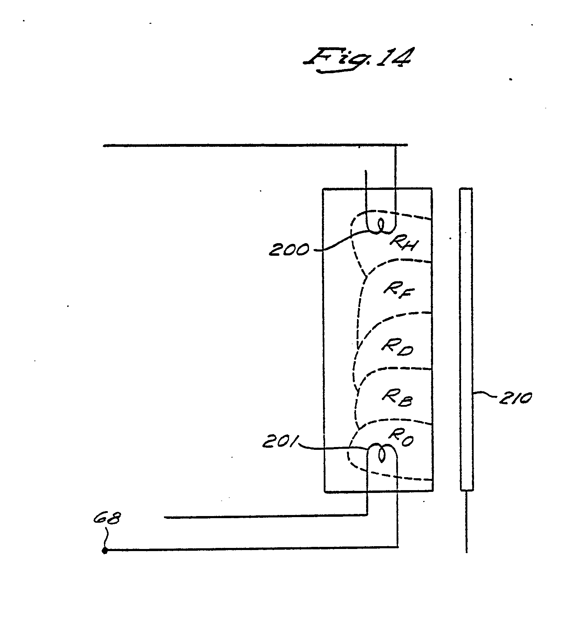

In Figure 3A, the magnitude of the lamp current in region A is shown to be roughly equal to the magnitude of the current in region B. Since, for reasons described above, there is no net DC current through the lamp, the respective areas under the curves in regions A and B are equal. Thus, in the circuit operating mode illustrated by Figure 3A, the duration of the time periods A and B are roughly equal. The operational mode shown in Figure 3A having approximately equal current flows in regions A and B is advantageous since it maximizes the efficiency of the lamp and also minimizes the current handling requirements for the switch transistor 14. This operating mode is achieved for a fairly narrow range of DC voltage output of the power source 16 for a given lamp. The circuit of Figure 6 described below provides a means for matching a given DC voltage to various lamps having different optimum voltages.

Figure 3B is a plot of the current through the choke or inductor 17 as a function of time. The current through the choke is plotted on the vertical axis, while time is plotted on the horizontal axis. In the region of Figure 3B denoted "A", at time $T_O$ the transistor has been turned off and the current through the choke is decaying as a function of time until time $T_A$. At time $T_A$, the transistor is turned on. The current through the choke in the region of Figure 3B denoted "B" increases until time $T_B$, at which time the transistor is turned back off and the cycle repeats itself. The behavior of the circuit thus alternates between the behavior plotted in region A and the behavior plotted in region B.

Figure 3C is the plot of the collector current of the transistor plotted as a function of time. The collector current amplitude is plotted on the vertical axis and time is plotted on the horizontal axis. In the region denoted A of Figure 3C, the transistor is off and therefore the collector current remains zero, from time $T_O$ to the end of region A at time $T_A$. In the region denoted B in Figure 3C, at time $T_A$ the transistor is turned on and remains on until time $T_B$, which defines the end of region B. During this time, the collector current continually increases. At time $T_B$ the transistor is again turned off and the process repeats itself. Thus, the collector current is periodic in time. The current level indicated by the plot is equal to the voltage on the conductor 22 of Figure 1 divided by the resistance of the resistor 15 in Figure 1.

Figure 3D is a plot of the voltage across the gas discharge lamp as a function of time. It is identical in shape to the lamp current shown in Figure 3A at the operating frequency of the circuit, i.e. the frequency at which, the transistor switch 14 is switched on and off. This frequency is chosen so that its period is short compared to the ionization time of the lamp. A representative operating range is from between 20 to 40 kHz. At this high frequency, the lamp appears electrically to be a resistor. Since the current through a resistor is linearly proportional to the voltage across it, the lamp voltage and current wave forms are identical in shape.

This high frequency operation has the significant advantage that the weight of the choke, shown in figure 1 as 17, may be considerably reduced below the weight of the typical chokes found in the usual fluorescent lamp circuits using 60 Hz AC sources. By way of specific example, a choke suitable for use at 20 kHz will weigh on the order of 4 or 5 ounces whereas the corresponding choke for use at 60 Hz will weigh 4 or 5 pounds.

A significant feature of the control device is the selectively variable control over lamp intensity which potentiometer 23 provides. The power input to the lamp (and the resultant light intensity) are approximately proportional to the average magnitude of the lamp current, which is plotted in Figure 3A. This plot shows the current reversal during periods when the transistor is turned off, which occurs, for example, at time $T_B$.

Assume that a particular setting "X" of the potentiometer 23 in Figure 1, the voltage on conductor 22 in Figure 1 is lower than the voltage on the conductor at another setting "Y" of the potentiometer 23. The corresponding changes in the waveforms in Figures 3A, 3B, 3C and 3D between the two settings of the variable resistor for effecting different levels of the light intensity are illustrated in these figures. In each figure, the waveform on the left is denoted "setting 'X'" and the waveform on the right in each figure is denoted "setting 'Y'".

The manner in which the control is achieved with potentiometer 23 is as follows:

The peak lamp current always occurs whenever the transistor is turned off, corresponding to times $T_O$ and $T_B$. This occurs whenever the sum of the choke current and lamp current passing through the resistor, denoted 15 in Figure 1, causes a voltage drop across this resistor equal to the voltage on the conductor, denoted 22 in Figure 1. As stated above, this occurrence causes the comparator amplifier, 20 in Figure 1, to give a positive output to the multivibrator, which in turn causes the multivibrator to turn the transistor off.

The current passing through the resistor, 15 in Figure 1, is the collector current of the transistor. This current is plotted in Figure 3C, as the sum of the lamp current and choke current in region B.

The peak collector current level is equal to the voltage on the conductor 22 in Figure 1 divided by the resistance of the resistor, 15 in Figure 1. When the voltage on the conductor 22 is increased or decreased, the collector current peak level will increase or decrease, respectively. Because the decay time of the current between time $T_0$ and time $T_A$ is always the same, the minimum value of the collector current will also increase or decrease, respectively. Thus, the entire waveform of the collector current will be shifted either up or down, respectively, of which two exemplary waveforms are plotted for the two different potentiometer settings "X" and "Y". The waveforms of the choke current and the lamp current will also be shifted up or down, respectively, as shown. This effect is the result of the fact that the collector current through the transistor is the sum of the choke current and lamp current, and the fact that the lamp current is proportional to the choke current.

Thus, it may be seen that the light intensity, which is proportional to lamp current, is proportional to the voltage on the conductor 22. By changing the resistance of the potentiometer 23 in Figure 1, the current supplied to the lamp 11 will change.

The useful life of the gas discharge lamp is increased in this invention since the net DC component of current through the lamp during continued operation is approximately zero. This is achieved by virtue or the parallel inductance which has the property of maintaining a zero DC voltage drop across its terminals. Since this zero DC voltage is also maintained across the lamp, the DC current through the lamp will also be zero.

Although the circuit is particularly suited for use with low intensity, low pressure mercury vapor fluorescent lamps, it can equally well be used to control various other types of gas discharge lamps such as high pressure mercury vapor, high or low pressure sodium, and metal Halide lamps.

Figure 2 illustrates a modified form of the invention effective to automatically control the intensity of the lamp, causing the intensity of illumination of the lamp 11, to be automatically controlled inversely proportional to the ambient illumination. This circuit is similar to that of Figure 1 and similar reference numerals are provided for similar components in Figure 2 and succeeding figures. In lieu of the potentiometer 23 of Figure 1, a photosensitive resistor 25 or similar photo-resistive device is connected in series with resistor 26 between the voltage source 24 and the differential amplifier 20.

Alternatively, and infrared sensing device (not shown) capable of varying its electrical resistance in proportion to the amount of infrared rays intercepted thereby, could be substituted for the photoresistor 25 to detect the presence of a human being in the vicinity of such sensor to cause illumination of the lamp 11 when the human being moves into the area adjacent the lamp.

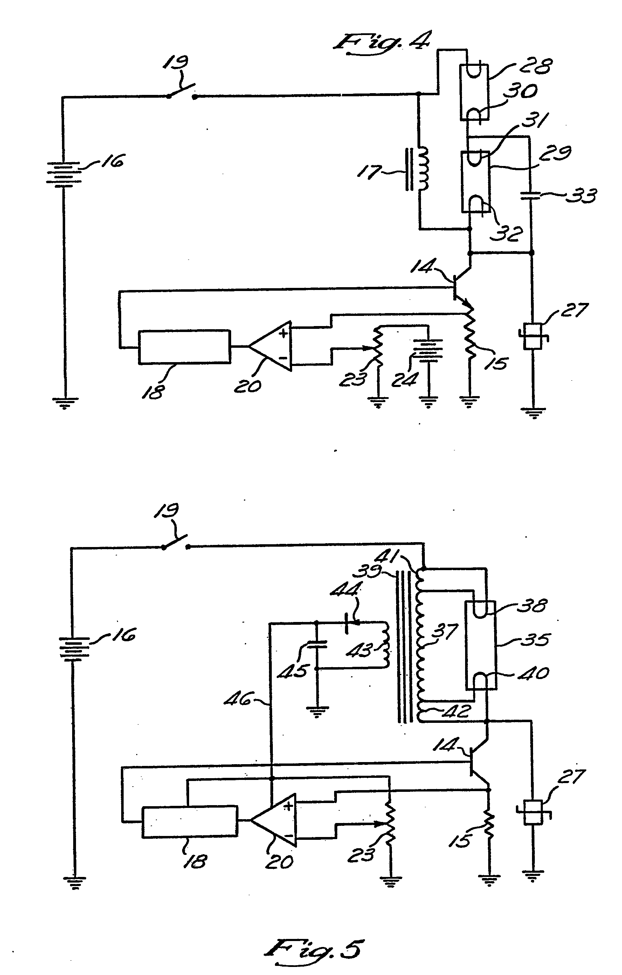

Figure 4 illustrates amother modified form of the invention in which two gas discharge lamps 28 and 29 are connected in series with each other in a circuit otherwise similar to that of Figure 1. Herein, the lamps 28 and 29 are of similar capacity and typically low pressure mercury vapor fluorescent lamps of 22 watts each. The electrode 30 of lamp 28 is connected directly to the electrode 31 of lamp 29. A capacitor 33 is connected across the electrode 31 and 32 of lamp 29.

When the lamps 28 and 29 are de-energized, they presents a relatively high resistance there-across. Thus, capacitor 33 initially presents a short across lamp 29 at the operating frequency of the circuit, e.g., 20,000 cycles per second. Therefore, when starting, the voltage from inductor 17 is initially applied through the capacitor 33 and across the lamp 28 to ignite the same. After lamp 28 has become ignited, its resistance drops considerably and most of the voltage across inductor 17 now appears across lamp 29, causing it to likewise ignite. The resistance of lamp 29 is relatively small compared to the reactance of capacitor 33 so that the latter has essentially no effect on the circuit during normal operation.

The above arrangement minimizes the breakdown voltage requirement of the transistor switch 14, thereby enabling a relatively small and inexpensive transistor to be used.

Figure 5 illustrates a further modified embodiment of the invention in which a gas discharge lamp 35, typically a low pressure mercury vapor fluorescent lamp of approximately 22 watts, is provided. The electrodes 38 and 40 are of the heated type. Power is derived from a DC voltage source 16.

An inductor 37 is connected in series with the transistor 14 and resistor 15 across the power supply 36. The electrodes 38 and 40 of lamp 35 are tapped into sections 41 and 42 of the winding of inductor 37 to preheat such electrodes prior to ignition of the lamp.

The inductor 37 also acts as the primary winding of a transformer and has an iron core 39 and a stepdown secondary winding 43 associated therewith. The winding 43 is connected in circuit with a diode 44 across a capacitor 45. The diode 44 is also connected through line 46 to the power input terminals of the comparator amplifier 20 and multivibrator 18. It is also used to supply the input voltage to the potentiometer 23.

The sections 41 and 42 of the winding of inductor 37 enable the electrodes 38 and 40 to become heated before the lamp is ignited. This arrangement maximizes electrode life and prevents damage to the electrodes 38 and 40 due to the otherwise excessive rise of temperature at the start of a lamp operation.

The polarity of the winding 43 is preferably such that the capacitor 45 is charged only when the transistor 14 is conducting. This arrangement ensures that the particular voltage on capacitor 45 is independent of the variable flyback voltage developed by the inductor 37 when the transistor 14 is cut off.

Figure 6 illustrates a detailed circuit schematic showing a number of circuit elements which were omitted from the simplified circuits described above to facilitate understanding of the overall operation of the invention. In addition, this figure illustrates several significant additional features of the invention.

The circuit of Figure 6 is designed to operate from a standard 120 volt AC line connected to terminals 50 and 51. These terminals respectively connect to on-off switch 19 and current limiting resistor 52 to a full wave diode bridge rectifier 53 comprising diodes 54, 55, 56, and 57. The DC output of this rectifier is connected across a wave smoothing capacitor 58. The negative bridge terminal is connected to ground and the positive bridge terminal is connected to one end of an auto-transformer winding 59 having a magnetic core 60, and secondary winding 61.

In the illustration, winding 59 functions as a voltage reducing auto-transformer with one of the lamp electrodes connected to respective mid taps 65 and 66 and the other lamp electrode connected to taps 67 and 68 located at the end of the winding. The purpose of the auto transformer is to match the DC power supply with the optimum voltage characteristic of the lamp. For example, the output of the diode bridge 53 is approximately 168 volts DC with 120 volt AC input. The optimum voltage for a 22 watt fluorescent lamp is, however, typically only 55 volts. Accordingly, the auto-transformer winding is selected so that the step down turns ratio is 168 divided by 55. It will be understood that if the optimum lamp operating voltage is larger than the DC power source voltage, a step up auto transformer would advantageously be used to supply the stepped up voltage in the same manner.

The collector of NPN switch transistor 14 is connected to the end terminal 68 of the auto-transformer winding 59. Its emitter is connected through a pair of diodes 69 and 70 and resistor 15 to ground. A capacitor 71 parallels the series connected diodes 69 and 70. Capacitor 71 is charged during steady state operation such that the combination of the capacitor 71 and diodes 69 and 70 back bias the transistor emitter.

Integrated circuit 75, diode 76, resistor 77 and capacitor 78 comprise one shot multivibrator 18. The power supply for this one shot multivibrator is provided by the secondary winding 61, diode 44 and capacitor 45 as described above with reference to the circuit of Figure 5.

The base of transistor switch 14 is connected to the output of the one shot multivibrator 18 through parallel connected resistor 80 and diode 81. Resistor 80 serves as a base current limiting resistor and shunting diode 81 serves to short out this resistor and provide a low impedance path for the charge stored in transistor 14 when the transistor is turned off. The base is also connected to ground through diode 82.

Comparator amplifier 20 comprises transistor 85 whose emitter is connected to the junction of diode 70 and resistor 15 through an RC filter comprising resistor 86 and capacitor 87. Its base is connected to potentiometer 23 and its collector is connected to the input of one-shot multivibrator 18 through resistor 88.

Potentiometer 23 is connected in series circuit with the resistor 90 and diodes 91, 92, 93, 94 and 95. Resistor 90 reduces the sensitivity of potentiometer 23. Diodes 91 to 94 protect the circuit against transients when the on-off switch 19 is initially closed and diode 95 compensates for the base-emitter drop of comparator transistor 20. As in the embodiment of Figure 5, the input voltage for potentiometer 23 is provided by the output of secondary winding 61. The RC filter comprising resistor 86 and capacitor 87 serves to prevent a voltage or current transient from affecting comparator transistor 20 and inadvertently triggering the one-shot multivibrator 18.

A resistive path directly connecting the positive terminal of the diode bridge 53 to the power supply provided by secondary winding 61 is provided by resistor 100. This resistor serves as a current bleeder resistor to provide start up power when the on-off switch 19 is initially closed.

Capacitor 105 and resistor 106 function in parallel with varistor 27 as a snubber protective circuit for protecting the transistor 14 from the inductive auto-transformer load when the transistor is being turned off.

Another significant feature of the circuit of Figure 6 is the inclusion of thermistor 110 electrically connected between the input of one shot multivibrator 18 and the positive side of the power supply capacitor 45. The thermistor is mechanically and thermally attached to the varistor 27 as indicated by the dotted line. The varistor has a negative temperature coefficient selected such that when a transient surge in the circuit causes the varistor to begin to overheat, the thermistor will become highly conductive and act to hole the input of the one shot multivibrator high, thereby maintaining the transistor 14 in the off state. Thus, the circuit illustrated in Figure 6 will remain effectively shut down until such time as the varistor 27 has a chance to cool. Accordingly, it will be seen that thermistor 48 prevents overheating of the varistor 27.

An exemplary circuit for operation of a 22 watt fluorescent lamp from 120 volt AC power constructed in accordance with Figure 6 included the following circuit components:

| | |
|---|---|
| Transistor 14 | MJE 13004 (Motorola) |
| Resistor 15 | 2.2 ohm |
| Potentiometer 23 | 200 ohm |
| Varistor 27 | V27S 20 (General Electric) |
| Resistor 52 | 1.5 ohm |
| Diodes 54—57 | IN 4003 |
| Capacitor 58 | 100 Micro farad |
| Winding 59 | 263+6+150+6 turns |
| Core 60 | Ferroxcube 376U250 −3c8 and 376B250−3c8 |
| Winding 61 | 41 Turns |
| Diodes 69, 70, 76, 81, 82, 91—95 | In 4148 |
| Capacitor 71 | 10 Micro farad |
| Integrated Circuit 75 | NE 555 V |
| Resistor 77 | 10K ohm |
| Capacitor 78 | .0033 Micro farad |
| Resistor 80 | 200 ohm |
| Transistor 85 | 2N 3904 |
| Resistor 86 | 22 ohm |
| Capacitor 87 | .1 Micro farad |
| Resistor 90 | 1.3K ohm |
| Resistor 100 | 20K ohm |
| Capacitor 105 | 560 pico farad |
| Resistor 106 | 220 ohm |
| Thermistor 110 | 4C5002 (Western Thermistor) |

(B) High power factor lamp circuit

The circuit of Figure 6 may be used in those circumstances wherein the power factor of the entire lamp circuit is not critical. Thus, it will be understood by those skilled in the art that the wave smoothing capacitor 58, connected across the full-wave rectifier bridge 53, while being used to provide essentially a DC signal level to the circuit, nevertheless reduces the power factor of the circuit substantially. This is a result of the phase difference between the current and voltage at the terminals 50, 51 caused by the impedance of capacitor 58. Such a power factor reduction is not permissible under certain circumstances.

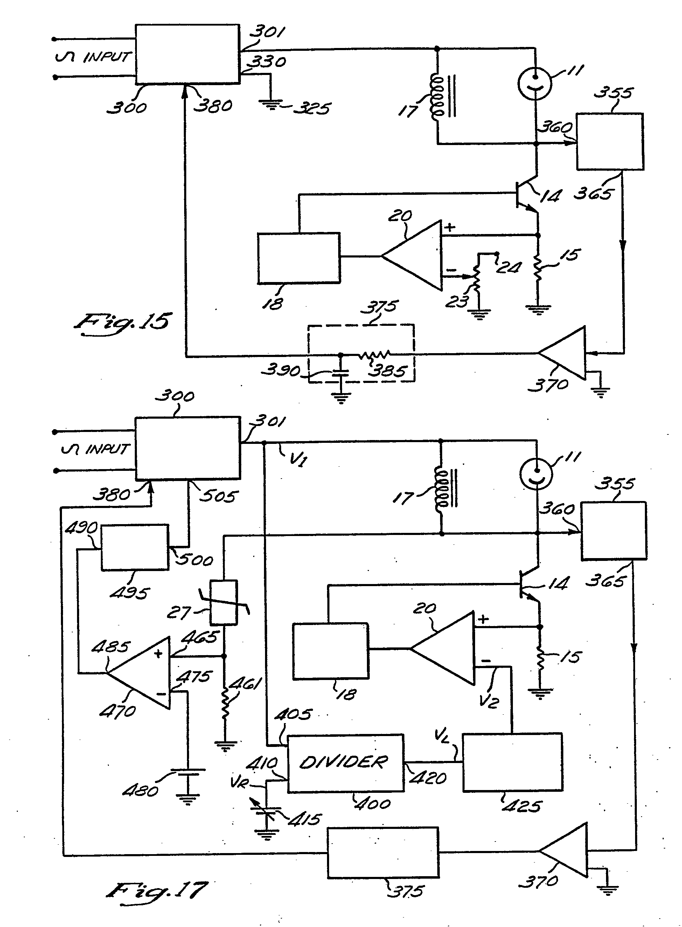

The second version of this invention, an embodiment of which is illustrated in Figure 7, provides a solution to this power factor problem. The circuit still operates from a 60-cycle alternating current source, but in this second version of the invention, the power factor is near unity. This is accomplished by connecting the potentiometer 23 which provides the reference signal level for the comparator 20 through a resistor 101 to the rectified AC voltage from the diode bridge 53. Thus, the circuit of Figure 7 is similar in operation to that of Figure 6, except that the reference voltage for the comparator/amplifier 20 is derived through the potentiometer 23 from a varying AC voltage rather than a fixed DC level, as was the case in Figure 6. This varying reference level provides, in accordance with the waveforms of Figure 3, a varying transistor switch current (Figure 3C) which is programmed, or fluctuates in accordance with the 60 Hz input AC signal level. This fluctuation is shown in Figure 8A and the resulting line current drawn at the bridge 53 is as shown in Figure 8B, that is, the unrectified equivalent of Figure 8A. It will be seen from Figures 8A and 8B that the comparator 20 has been provided with a fluctuating threshold voltage which forces the current level through the resistor 15 to cyclically vary in a cycle which is precisely in phase with the applied voltage from the 60-cycle source. In each of Figures 8A and 8B, the average current I3 and I5, respectively, is shown for the resistor 15 and the input power terminals 50 and 51. This average current I3, I5 is precisely in phase with the applied voltage, since the individual 20—40 kiloHertz peaks I7 and I9, respectively, of Figures 8A and 8B, have been programmed to be proportional to the applied voltage.

Since the average current I5 is in phase with the applied voltage, the power factor of the circuit of Figure 7 is essentially unity. Thus, it has been found that, by using the circuit of Figure 7, the large wave smoothing capacitor 58 of Figure 6 may be eliminated from the circuit and the threshold voltage of the comparator 20 may be made to follow the 60-cycle AC line voltage by connecting the potentiometer 23 through a resistor 101 to the input rectified line source.

The arrangement described improves the power factor of this lamp circuit so that it may be applied in most circumstances to standard AC line source. It does, however, produce an additional problem not present in the circuit of Figure 6. Specifically, it has been found that the resistance of the lamp 35 becomes very high each time that the applied AC line voltage at terminals 50, 51 crosses zero volts.

The relatively high resistance of the lamp 35 which is experienced at each zero crossing of the line voltage may be explained as follows. A gas discharge lamp 35 may be characterized as a resistor for frequencies whose period is small compared to the ionization time constant of the lamp. This is true for the ballast oscillation frequency of 20—40 kHz but not for the power line frequency 60 Hz. Thus, the ionization time constant of a 22-watt Circline fluorescent lamp, for example, is .4 milliseconds. Consequently, the effective resistance of the lamp will vary during the 60-Hz line cycle. The resistance is greatest right after a zero axis crossing and decreases as the cycle progresses, reaching a minimum value approximately 60 electrical degrees before the next zero axis crossing.

This high resistance of the lamp 35 causes the frequency of oscillation of the ballast circuit to decrease. Thus, while the normal frequency of oscillation is chosen to be above the audible range, the frequency may periodically drop down into the audible range after each line voltage zero axis crossing, which may prove annoying to persons near the lamp. In addition, and of more importance, is the fact that, after each zero axis crossing of the AC line voltage, an extremely high voltage will appear at the collector of the transistor 14, when the transistor 14 turns off. As was explained previously, if the lamp 35 is removed from the circuit, the collector of the transistor 14 is subjected to the extremely high fly back voltage of the ballast 17. This same effect occurs after each zero crossing of the applied line voltage, since the effective resistance of the lamp 35 is very high. The repetitively applied high voltage at the collector of the transistor 14 may damage the transistor 14. Even if a protective clamping device is employed, this device may itself overheat.

The simplified circuit of Figure 9 provides a solution to this resistance problem without substantially degrading the circuit's power factor. The circuit of Figure 9 is similar in operation to that of Figure 6, except that it incorporates the 60 Hz input to the comparator/amplifier 20 described in reference to Figure 7. In addition, a secondary winding 107 has been added to the inductor 17, this winding being connected to a series combination of a diode 109 and capacitor 111. In addition, the junction between the diode 109 and the capacitor 111 is connected by a diode 113 to the output line 115 from the bridge 53. In addition, a filter circuit in the form of a series inductance 117 and shunt capacitor 119 is added between the line input terminals 50, 51 of the full-wave rectifying bridge 53.

The capacitor 111 is relatively large, having enough capacity to maintain the lamp voltage during zero axis crossing of the AC power line voltage at terminals 50, 51. The turns ratio defined by the secondary winding 107 is preferably less than one so that the voltage of the capacitor 111 is maintained at a lower value than the peak value of the line voltage on line 115.

This circuit operates as follows. The secondary winding 107, capacitor 111, and the diode 109 form a positive DC power supply, charged periodically by the rectified voltage on line 115. This DC power supply is only connected to supply power to the winding 59 when the AC line voltage on line 115 drops below the voltage to which the capacitor 111 is charged. At this time, the capacitor 111 supplies current through the diode 113 to the lamp 35 and inductor 17. The diode bridge 53, during this same time period, disconnects the lamp 35 and inductor 17 from the AC power lines, since the diodes within the bridge 53 are reversed biased. Thus, the line current drops to zero.

The capacitor 111 continues to supply the ballast current until that point in the next half cycle when the line voltage on line 115 reaches the voltage level of the capacitor 111. At this time, the diode 113 becomes reversed biased, and the AC power line 115 supplies power to the lamp 35 and inductor 17.

The inductor 117 and capacitor 119 may be selected to filter out the 20—40 kHz variations of Figure 8B without substantially affecting the 60-Hz power factor.

Figure 10 is a detailed schematic diagram of a circuit similar to that of Figure 9, and including the circuit elements of Figure 6.

Waveforms for the circuit of Figure 9 are shown in Figures 11A, 11B, and 11C, wherein Figure 11A is the applied AC line voltage at terminals 50 and 51, showing the location of the zero crossing point, Figure 11B is the voltage at line 115 of Figure 10 showing that the voltage is rectified equivalent of the voltage of Figure 11A, except that the voltage is held up or supported at a level 121 by the capacitor 111 at each zero crossing location. This, of course, prohibits a nulling at the lamp 35 so that the effective resistance of the lamp 35 never increases to a level which would generate excessive voltages at the transistor 14. Likewise, the voltage is maintained at a level which prohibits the lamp resistance 35 from lowering the frequency of the ballast circuit into the audible range.

Figure 11C shows the line current drawn by the entire circuit at the AC line junctions 50 and 51. This current is filtered by the inductor 117 and capacitor 119 so that only the low frequency components remain. From Figure 11C, it can be seen that no current is drawn during those periods of time when the capacitor 111 supports the ballast current. In addition, Figure 11C shows small current pulses 123 which occur at the peaks of the AC line voltage and reflect the additional current utilized in charging the capacitor 111 at this time when the output of the transformer 107 exceeds the voltage of the capacitor 111.

While it can be seen that the current waveform of Figure 11C is not a perfect sinusoid, it nevertheless is in phase with the voltage waveform of Figure 11A and is sufficiently smooth and uniform so that the power factor is still near unity. The circuit of Figure 10 thus provides a high power factor lamp circuit which utilizes a small ballast and provides for a programmed current level for the lamp wherein each current peak at the 20—40 kHz rate is programmed to reach a level which is in a predetermined proportion of the line voltage determined by the potentiometer 23. At that same time, excessive voltages on the switching transistor 14 and reductions in the frequency of the entire circuit are eliminated through the use of the capacitor 111 which supports the line voltage level to prohibit a nulling of the rectified voltage.

(C) Starter aid circuit

Figure 12 illustrates a circuit similar to the circuit of Figure 6 but further including a starter aid 210.

In the circuit of Figure 12, the fly back voltage across the electrodes 200, 201 caused by switching the transistor 14 off must be sufficiently high to light the lamp when the switch 19 is first closed. The voltage occurring in the circuit when the transistor 14 is first turned off, corresponding to time $T_B$ in Figure 3a, will be referred to as the fly back voltage. Ignition of the lamp requires that the fly back voltage between the two electrodes 200, 201 in the lamp 35 be sufficiently high, and the distance between the electrodes 200, 201 be sufficiently small for the resulting voltage gradient in the lamp 35 to have sufficient magnitude to cause the gas inside the lamp 35 to ionize. The term "voltage gradient" is understood to be the voltage drop per unit distance. It is well known that, for a gas which may be used in a gas discharge lamp, there is a threshold voltage gradient below which ionization of the gas cannot be achieved.

The voltage gradient near the electrode 201 at ignition of the lamp is proportional to the fly back voltage across the two electrodes 200, 201 divided by the distance between the electrodes 200, 201. The large fly back voltages which are typically required may have deleterious effects upon the transistor 14, and therefore upon the reliability of the circuit of Figure 12. It is this concern for the reliability of the circuit of Figure 12 that prompts the use of varistor 27, the thermistor 110, and the capacitor 105.

As mentioned above, it is well known that commercially available gas discharge lamps operate most efficiently at a certain optimum supply voltage. In order to match the line voltage with this optimum lamp voltage, an auto transformer may be used as shown in Figure 12. The auto transformer 59 has a step down ratio which is proportional to the number of turns in the winding of the auto transformer 59 between the taps 66 and 67 divided by the total number of turns in the entire winding.

Introduction of the auto transformer 59 causes a reduction in the fly back voltage between the electrodes 200, 201. Therefore, in order to provide a threshold voltage gradient in the lamp 35 sufficient to ignite the lamp when the switch 19 is first closed, the fly back voltage must be increased. This increase in fly back voltage may be achieved by increasing the breakdown voltage of the varistor 27. Otherwise, when the switch 19 is closed, the lamp 35 may not ignite. This increase in fly back voltage, however, increases the likelihood of harm to the transistor 14 and decreases the reliability of the circuit of Figure 12.

These difficulties are overcome by connecting a starter aid 210, as shown in Figure 12 to ground 231, and locating the starter aid 210 adjacent the lamp 35. The starter aid 210 is merely an elongate conductor which is preferably mounted parallel to and within one inch of the lamp 35. It may, for example, be a thin strip of metal mounted on the outside of the lamp 35.

The starting aid 210 acts to increase the voltage gradient near the electrode 201 when the transistor 14 is first opened to produce a fly back voltage in the circuit. Because this fly back voltage is the largest voltage in the circuit, it is used to ignite the lamp. In the absence of the starter aid conductor 210, the voltage gradient created in the lamp by the fly back voltage is inversely proportional to the distance between the electrodes 200 and 201. However, when the starter aid conductor 210 is connected to ground 231 and held adjacent to the lamp 35, it provides a voltage gradient between the electrode 201 and the starting aid conductor 210. This voltage gradient is much larger than the voltage gradient created in the absence of the starter aid conductor 210 between the electrode 201 and the electrode 200 because the distance between the electrode 201 and the starting aid conductor 210 is much less than the distance between the electrode 201 and the electrode 200.

When the switch 19 is closed, the transistor 14 is first closed and then opens to cause the fly back voltage in the manner described earlier. The fly back voltage between the terminal 68 and ground 231 results in a large voltage gradient between the electrode 201 and the starter aid conductor 210. Of course, another voltage gradient will appear between the electrode 200 and the starter aid conductor 210, but because the fly back voltage at the electrode 200 is reduced by the step down transformer 59, the voltage gradient in the vicinity of the electrode 201 is larger.

Preferably, the maximum voltage gradient which appears at the electrode 201 is just sufficient to ionize the gas in the vicinity of the electrode 201. However, because this maximum voltage gradient is restricted to a limited vicinity around the electrode 201, ionization will occur in this limited area only. However, during subsequent operation of the circuit, the vicinity of ionization will progressively expand, as best illustrated in Figure 14. Referring to Figure 3, assuming that the transistor 14 has opened to cause the fly back voltage at time $T_O$ of Figure 3a, the transistor will again close at time $T_A$ and the fly back voltage will disappear. The transistor again opens at time $T_B$ and a fly back voltage again appears. The ionized gas which was created by the first fly back voltage at time $T_O$ does not totally deionize between $T_A$ and time $T_B$, the interval between fly back voltages, but substantially remains in the vicinity of the electrode 201, which is illustrated in Figure 14 as the outlined region designated $R_O$.

During the next fly back voltage at $T_B$, the ionized gas in the region $R_O$ acts substantially as a conductor. Therefore, a large voltage gradient is created by the fly back voltage at time $T_B$ and appears between the entire region $R_O$ and the starter aid conductor 210. This large voltage gradient is sufficient to cause further ionization, and this causes the region of ionization to expand from the smaller region $R_O$ to the larger region $R_B$. Again, the cycle repeats itself, and this time the fly back voltage gradient appears between the conducting ionized gas in the expanded region $R_B$ and the starter aid conductor 210, which causes the region of ionized gas to further expand until it encompasses the region $R_D$.

It is seen that, through successive cycles, the region of ionized gas expands progressively, beginning in the smaller region $R_O$, then regions $R_B$, $R_D$, $R_F$, and finally encompasses the region $R_H$ which includes the second electrode 200 and establishes a conducting ionized gas electrical current path between the electrodes 200 and 201, at which time the ignition of the lamp 35 is complete. It may also be seen that the fly back voltage of the terminal 68 required to ignite the lamp may be relatively small to increase the reliability of the circuit.

It is significant that in the circuit of Figure 12, the location of the taps 65, 66, 67, and 68 on the auto transformer 59 is arbitrary, and the electrodes 200, 201 may be connected across any segment of the auto transformer 59 which gives the proper step down ratio without affecting the operation of the lamp 35 after ignition. For example, the lamp 35 may be connected across the top half of the auto transformer, or the lamp may be connected across the intermediate segment of the auto transformer 59. However, as pointed above, the auto transformer 59 causes a reduction in the fly back voltage between the electrodes 200, 201. A similar reduction in fly back voltage between the electrode 201 and ground 231, which generates the starting voltage gradient between the electrode 201 and the starter aid conductor 210, is present in the circuit of Figure 12 due to the step down auto transformer 59. It is desirable to eliminate any reduction of the voltage between the electrode 201 and the conductor 210 by the auto transformer 59, so that the voltage gradient near the electrode 201 may be maximized when the transistor 14 first opens to create a fly back voltage to ignite the lamp 35.

The circuit of Figure 13 eliminates any reduction of the voltage gradient between the electrode 201 and the conductor 210 by the auto transformer 59. The operation of the circuit of Figure 13 is similar to that of Figure 12 except that the corresponding voltage gradient at the electrode 201 caused by the fly back voltage between the electrode 201 and the conductor 210 is maintained at the threshold level required for ignition without regard to the selection of the step down ratio of the auto transformer 59. The electrode 201 in Figure 13 is connected directly to the terminal 68 connecting the transistor 14 to the auto transformer 59 while the other electrode 200 is connected to a mid-tap on the auto transformer 59 such as the mid-tap 66. Such a direct connection prevents the fly back voltage between the starter aid 210 and the electrode 201 from being reduced by the step down auto transformer 59.

Unless the electrode 201 is connected to the collector of the transistor 14 as shown in Figure 13 and the starter aid conductor 210 is used, the largest voltage gradient inside the lamp 35 at ignition is approximately proportional to the fly back voltage appearing across the terminal 68 and ground 231 reduced by the auto transformer 59 and divided by the relatively large distance between the electrodes 201, 200. It is now apparent that introduction of the starter aid conductor 210 permits a much smaller fly back voltage to be used which can nevertheless cause a sufficiently large voltage gradient between the electrode 201 and the starter aid conductor 210 to achieve ionization of the gas in the lamp 35 and ignition of the lamp when the switch 19 is first closed. Furthermore through proper connection of the auto transformer to the lamp, as shown in Figure 13, an auto transformer of any step down ratio may be used without affecting this voltage gradient. It should be recognized that a step up auto transformer for increasing the voltage supplied to the lamp 35 may also be used in place of the step down auto transformer 59 of Figure 13.

(D) Symmetrical lamp voltage regulation

The control circuits described above are particularly suited for use with low intensity, low pressure mercury vapor fluorescent lamps. However, when used to control various other types of gas discharge lamps such as high pressure mercury vapor, high or low pressure sodium, and metal Halide lamps, significant problems may arise. The efficiency of such lamps has been found to be maximized only when the lamp voltage waveform of Figure 3D is symmetrical.

Referring to Figure 3D, it should be recognized that if the time interval between $T_O$ and $T_A$ is equal to the time interval between $T_A$ and $T_B$, the voltage waveform supplied to the lamp, illustrated in Figure 3D, will have a generally symmetrical form. It has already been seen that the time interval between $T_O$ and $T_A$ is determined by the time delay of the one-shot multivibrator 18 during which it remains in its low state before switching to its high output state. The time interval between $T_A$ and $T_B$ is a function of the voltage supplied to the control circuit from the voltage source 16. Thus, if a symmetrical voltage waveform is to be supplied to the lamp 11, the voltage source 16 must supply a voltage having a magnitude which causes the time interval between $T_A$ and $T_B$, illustrated in Figure 3D, to be equal to the fixed time interval between $T_O$ and $T_A$ defined by the low output state of the multivibrator 18. If the lamp 11 in Figure 1 is a high intensity mercury vapor gas discharge lamp and a control circuit similar to the simplified circuit illustrated in Figure 1 is employed, it has been found that a voltage supplied by the source 16 equal to 130 volts will cause a symmetrical voltage waveform to be supplied to the lamp 11 in which the time interval between $T_O$ and $T_A$ is equal to the time interval between $T_A$ and $T_B$ and the lamp voltage waveform as illustrated in Figure 3D.

It is apparent that an obvious technique for providing a symmetrical voltage in the lamp 11 of Figure 1 is to select a voltage source 16 which provides an output voltage of 130 volts DC. However, as illustrated in Figure 3D, the symmetry or assymmetry of the voltage waveform supplied to the lamp is not only a function of the magnitude of the voltage supplied by the source 16, but is also a function of the voltage supplied by the potentiometer 23 as a reference voltage to the comparator 20. Thus, even though the voltage from the source 16 will provide a symmetrical voltage waveform in the lamp 11 for one setting of the potentiometer 23, such as setting "Y" of Figure 3D, changing the potentiometer 23 to another setting, such as setting "X" of Figure 3D, will alter the lamp voltage waveform so that it is no longer symmetrical. Therefore, using this simplified technique, the symmetrical voltage waveform cannot be maintained if the setting of the potentiometer 23 is to be permitted to change.

Another problem is encountered when the lamp 11 is a high intensity mercury vapor discharge lamp. If the voltage source 16 supplies the requisite 130 volts which results in the control circuit providing a symmetrical voltage waveform in the lamp 11, when the switch 19 is first closed and the lamp 11 is cold, the mercury vapor in the lamp 11 ionizes very rapidly so as to cause the multivibrator 18 to change state to turn off the transistor 14 prematurely before the current through the inductor 17 has increased sufficiently. As a result, the warm-up period of the lamp 11 may be extended, and it is even possible that the lamp 11 and the associated control circuit will never reach the normal operating mode. This is a result of the fact that the voltage corresponding to a symmetrical waveform in the high pressure mercury vapor lamp, or symmetry voltage $V_S$ is 130 volts when the lamp is warm but only 20 volts when the lamp is cold. Thus, the symmetry voltage changes as the lamp temperature changes during the entire time that the switch 19 is closed. Therefore, a single supply voltage from the source 16 will not always provide a symmetrical voltage waveform within the lamp. Furthermore, even if the magnitude of the voltage supplied by the source 16 is selected to equal the symmetry voltage of the lamp when warmed up, the lamp characteristics may change during the life of the lamp; or, if the lamp is itself exchanged for another lamp, the voltage supplied by the source 16 will no longer be the requisite symmetry voltage.

If, on the other hand, symmetry is imposed by holding the on time of transistor 14 to a constant value, for example, by use of a bi-stable multivibrator having fixed "on" and "off" time periods which are equal, it would no longer be possible to vary or select the lamp illumination intensity in the manner described above in connection with Figure 1.

Figure 15 is a simplified schematic diagram of an embodiment of this invention in which the foregoing problems are solved. A voltage regulator 300 supplies voltage to the gas discharge lamp 11 connected in parallel across an inductor 17. The parallel combination of the lamp 11 and inductor 17 is connected in series which a transistor 14 and a resistor 15 which is connected through ground to the voltage regulator return 330. A comparator amplifier 20 and an astable multivibrator 18 are connected between the transistor 14 and the resistor 15 in the same manner as discussed above in connection with Figures 1 and 3. The comparator 20 receives a reference signal from a reference voltage source 24 connected across a potentiometer 23. The circuit Fig. 15 includes a symmetry detector 355 having its input 360 connected to the collector of the transistor 14 and its output 365 connected through an amplifier 370 and a stabilizing network 375 to a feedback reference input 380 of the voltage regulator 300. The symmetry detector 355, the amplifier 370, the stabilizing network 375, and the feed-back reference input 380 form a supply voltage feedback control loop which maintains the supply voltage at the lamp 11 at the symmetry voltage $V_s$. The symmetry detector is a circuit that produces a DC voltage at its output 365 proportional to the difference between the on-time of the transistor 14, corresponding to the interval between $T_A$ and $T_B$ of Figure 3, and the off-time of the transistor 14, corresponding to the time interval between $T_O$ and $T_A$ of Figure 3. Therefore, in one embodiment the output 365 of the symmetry detector 355 is positive if the on-time of the transistor 14 exceeds its off-time while the output 365 of the symmetry detector 355 is negative if the on-time of the transistor 14 is less than its off-time.

The stabilizing network 375 is included in the feedback loop to achieve stability against oscillation. It may be a simple low-pass filter including a resistor 385 and a capacitor 390.

The operation of the feedback loop controls the output voltage $V_1$ of the voltage regulator 300 to be at or near the symmetry voltage $V_x$, which causes the on and off times of the transistor 14 to be equal, corresponding to a symmetrical voltage waveform to the lamp 11. A description of the operation of the feedback loop may begin with an assumption that the voltage $V_1$ supplied by the voltage regulator 300 to the lamp 11 is greater than the requisite symmetry voltage $V_s$, causing the on time to be shorter than the off time of transistor 14. This would cause the output 365 of the symmetry detector 355 to be negative. This negative output of the symmetry detector is amplified by the amplifier 370 and the resulting voltage is then applied to the feedback reference input 380 of the voltage regulator 300 as negative feedback. The voltage regulator 300 responds to this negative feedback by reducing voltage $V_1$ at the output 301 of the voltage regulator 300. For very high loop gains, the voltage supplied to the lamp 11 will be reduced by feedback from the symmetry detector 355 until it nearly equals $V_s$, at which time the output of the symmetry detector 355 will approach zero. At this point, a symmetrical voltage waveform will be applied to the lamp 11. It should be apparent that, while the symmetry voltage $V_s$ may change due to temperature changes in the lamp 11 or due to aging of the lamp 11, the symmetry detector 355 will cause the voltage supplied to the lamp to be maintained at or near the symmetry voltage $V_s$, regardless of variations in $V_s$. The stabilizing network 375 prevents rapid changes in the feedback signal provided by the amplifier 370, thus increasing the stability of the supply voltage feedback control loop.

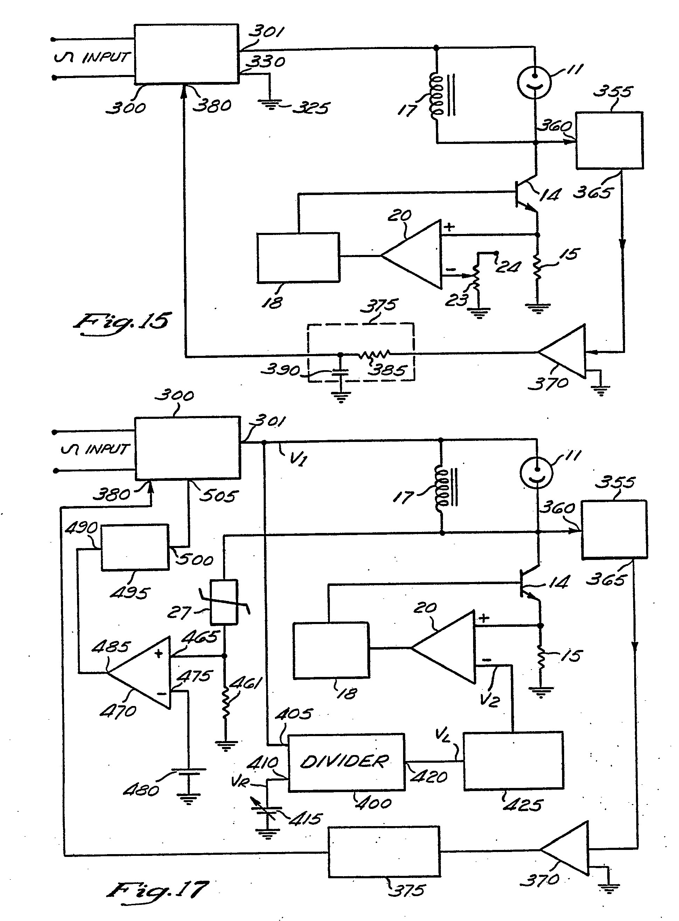

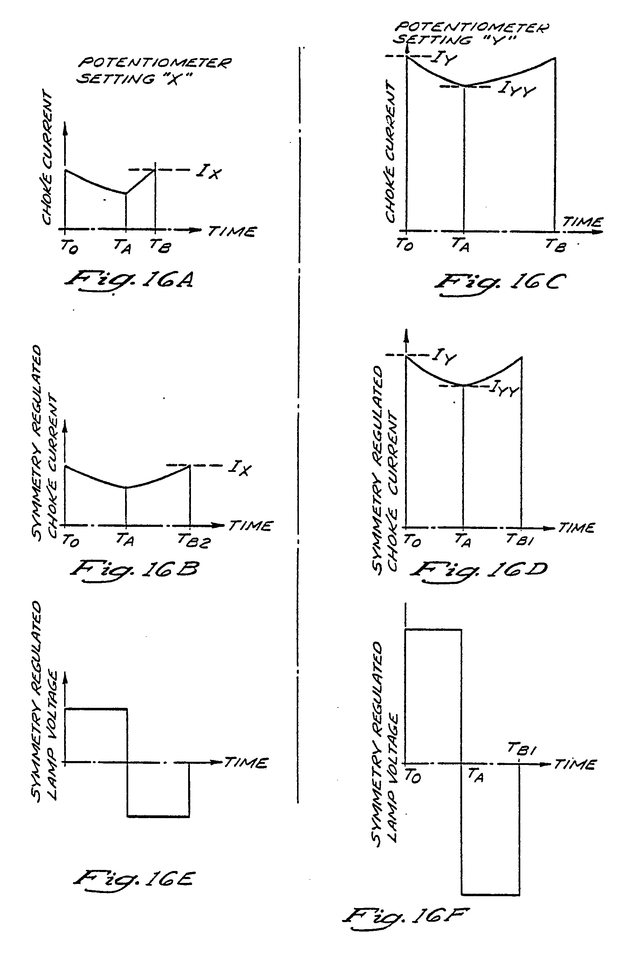

The effect of the symmetry regulation loop of Figure 15 is best seen by reference to the time domain plots of the current through the choke 17 in Figure 16. Figures 16A and 16C are time domain plots of the choke current in the absence of symmetry regulation in a control circuit such as the circuit illustrated in Figure 1. The plots of Figure 16A and 16C are for two settings, "X" and "Y", respectively, of the potentiometer 23 of Figure 1, and these plots are seen to correspond to the two time domain plots of Figure 3B. The effect of the introduction of symmetry regulation into the circuit is illustrated in Figure 16B and 16D. Figure 16B is a time domain plot of the symmetry regulated choke current for the setting "X" of the potentiometer 23 in the circuit of Figure 15 corresponding to the setting "X" of potentiometer 23 in Figure 1 and Figure 16D is a time domain plot of the symmetry regulated choke current for setting "Y" of potentiometer 23 in the circuit of Figure 15 corresponding to the setting "Y" of potentiometer 23 in Figure 1.

Turning to the graph of Figure 16A and referring to the description of the circuit of Figure 1, if the potentiometer 23 has a setting of "X", the control circuit of Figure 1 will cause the time domain waveform of the choke current illustrated in Figure 16A to have a peak value $I_x$. During the time interval from $T_0$ to $T_A$, the choke current decreases as the flyback voltage in the choke 17 decreases. The time interval between $T_0$ and $T_A$ is a fixed interval determined by the duration of the astable state of the multivibrator 18. At time $T_A$, the transistor 14 is turned on, the choke current increases until, at time $T_B$, it reaches its peak value $I_x$. At this time, the setting "X" of potentiometer 23 causes the circuit to flyback. If the supply voltage from the source 16 is of sufficient magnitude, the choke current will increase very rapidly, so that the time period from $T_A$ to $T_B$, required for the choke current to increase to its peak value, after the transistor 14 is turned back on, may be quite short with respect to the period from $T_0$ to $T_A$ of the astable state of the multivibrator 18. Therefore, in the absence of symmetry regulation, it is seen that the charging portion of the choke current waveform between $T_A$ and $T_B$ is much shorter than the flyback portion of the choke current between time $T_0$ and $T_A$. This corresponds to an on-time of the transistor 14 which is much shorter than its off-time.

If the symmetry regulated feedback control loop of Figure 15 is introduced into the lamp control circuit, as illustrated in Figure 15, the voltage $V_1$ supplied to the control circuit will be decreased by the symmetry control loop. As a result, after the transistor 14 is turned back on at time $T_A$, a much greater length of time is required for the current in the choke 17 to increase to its maximum peak value $I_x$ determined by the setting X of potentiometer 23. The on-time of the transistor is increased as a result of the decrease in supply voltage, as illustrated in Figure 16B. Note that the slope of the top of the positive portion of the choke current waveform in Figure 16B is much more gradual than the corresponding portion in Figure 16A. This is a direct result of the decrease of the supply voltage $V_1$ impressed across the choke 17. The symmetry regulation feedback control loop of Figure 15 decreased the supply voltage $V_1$ from the voltage regulator 300 of Figure 15 to increase time $T_B$ of time $T_{B2}$ precisely so that

$$(T_{B2}-T_A)=(T_A-T_0).$$

As a result, the corresponding symmetry regulated voltage waveform of Figure 16E is exactly symmetrical.

If the setting of the potentiometer 23 of Figure 1 is changed from setting "X" to a higher setting "Y", the peak current through the choke 17 will increase from $I_x$ to $I_y$. The choke current will decrease during the time interval from $T_0$ to $T_A$ to a value $I_{YY}$, as illustrated in Figure 16C. When the transistor 14 is turned back on at time $T_A$, the choke current will increase from $I_{YY}$ back to its maximum peak value $I_y$ determined by the setting "Y" of the potentiometer 23. If the voltage furnished by the source 16 in the absence of symmetry regulation is not very large, a long period of time corresponding to the interval $T_A$ to $T_B$ in Figure 16C will be required for the current in the choke 17 to increase from $I_{YY}$ to $I_Y$. Therefore, the increasing portion of the choke current waveform of Figure 16C will last for a much longer period of time, $T_A$ to $T_B$, than the decreasing portion of the choke current waveform of Figure 16C as defined by the time interval $T_O$ to $T_A$.

If the symmetry regulation control loop of Figure 15 is now introduced into the control circuit as illustrated in Figure 15 while the potentiometer 23 has a setting of "Y", the symmetry control loop of Figure 15 will cause the voltage supplied $V_1$ to the lamp circuit to increase. As a result, a shorter period of time will be required for the current through the inductor 17 to increase from $I_{YY}$ to $I_Y$. This current increase occurs, as shown in Figure 16D, between time $T_A$ and time $T_{B1}$. Note that the slope of the top of the positive portion of the choke current waveform of Figure 16D between time $T_A$ and $T_B$ is much steeper than the corresponding portion of Figure 16C. This corresponds to the increase in the voltage $V_1$ impressed across the choke 17. With the increased setting "Y" of potentiometer 23, the introduction of the symmetry regulation control loop causes the time at which the lamp voltage reaches its peak value determined by the setting "Y" of potentiometer 23 to decrease from time $T_B$ in Figure 16C to time $T_{B1}$ in Figure 16D. The symmetry regulation control loop causes the voltage supplied $V_1$ to the lamp control circuit from the voltage regulator 300, to be increased precisely so that the interval defined by $T_A$ to $T_{B1}$ equals the interval defined by $T_O$ and $T_A$. As a result, the on-time of the transistor 14 equals its off-time and the lamp voltage waveform becomes symmetrical, as illustrated in Figure 16F.

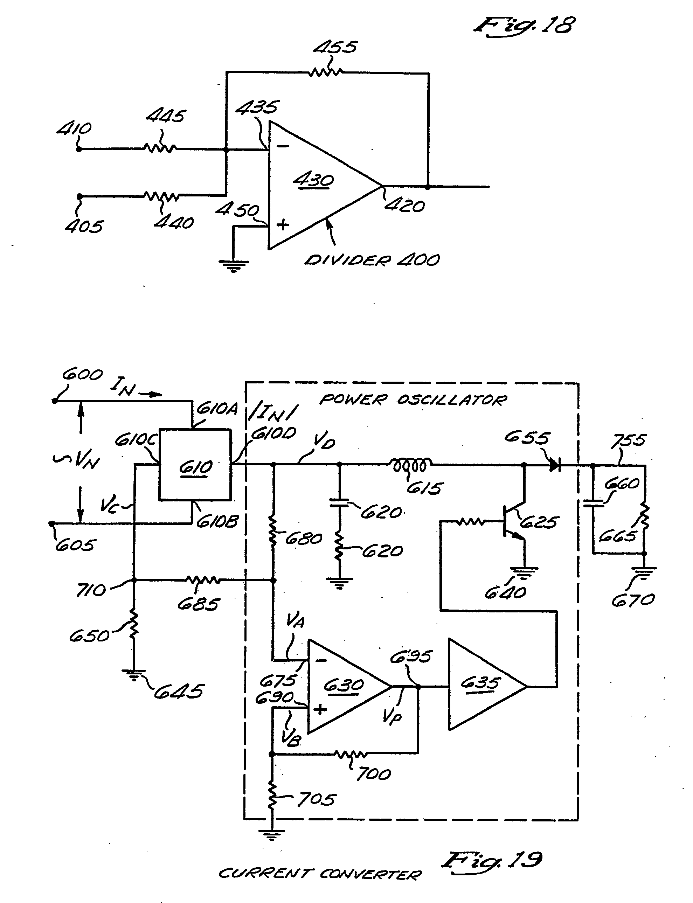

Figure 17 shows a circuit similar to the circuit illustrated in Figure 15 but including, in addition, a reference voltage feedback control loop and a protective circuit to protect the transistor 14 in the event that the lamp is removed from the circuit. The reference voltage control loop minimizes variations in lamp intensity due to changes in supply voltage, and includes a divider circuit 400 having one of its inputs 405 connected to the output 301 of the voltage regulator 300 and its other input 410 connected to a variable reference voltage source 415. The output 420 is connected to a voltage limiter 425, which, in turn is connected to one input of the comparator 20. Voltage $V_L$ at the output 420 of the divider circuit 400 is proportional to the difference between reference voltage $V_R$ of the reference source 415 and output voltage $V_1$ of the voltage regulator 301 connected to the inputs 410 and 405, respectively, of the divider 400.

The divider 400 is shown in detail in Figure 18 as including a differential amplifier having its negative input 435 connected through a resistor 440 to the input 405 and also connected through resistor 445 to the input 410. The positive input 450 of the differential amplifier 430 is connected to the ground. Feedback resistor 455 provides scaling of the input voltages $V_R$ and $V_1$ and the output voltage $V_L$.

The operation of the reference voltage feedback control loop (Fig. 17) is as follows: The variable reference voltage source 415 may be varied to select voltage $V_2$ at the reference input of the comparator 20 so that the lamp 11 produces the illumination intensity desired by the user, as described above in connection with Figures 1, 2 and 3. If the output voltage $V_1$ of the voltage regulator 300 is reduced, the output voltage $V_L$ of the divider 400 will be increased. This is because the voltage difference between the inputs 410 and 405 will have been increased due to the reduction in $V_1$. The resulting increase in $V_L$ will cause a corresponding increase in the voltage $V_2$ at the reference input to the comparator 20. As described above in connection with Figures 1, 2 and 3, the increase in $V_2$ will cause a corresponding increase in the current flowing to the lamp 11. The resistors 440, 445 and 455 (Fig. 18) are selected so that the change in $V_2$ precisely makes up for the change in $V_1$ to maintain the power supplied to the lamp 11 at a nearly constant value. The output voltage $V_1$ of the regulator 300 may also increase after the reference voltage $V_R$ has been selected by the user. In this case, the difference between the voltages at the inputs 405 and 410 sensed by the divider circuit 400 will be smaller, but will result in a decrease in $V_L$ and a corresponding decrease in $V_2$ at the input of the comparator 20. This will result in a decrease in current supplied to the lamp 11 in the manner described above in connection with Figures 1, 2 and 3.

The voltage limiter 425 prevents excessive current from flowing through the lamp 11. It has already been pointed out that, if a high intensity mercury vapor lamp is used as the lamp 11, voltage initially applied to the lamp will cause it to ionize rapidly, causing an excessively large current to flow through the lamp while the lamp is still cold, which may damage the lamp 11. In order to prevent such an occurrence, the voltage limiter 425 clips the voltage $V_L$ supplied from the output 420 of the divider 400 to the reference input of the comparator 20. It has already been seen that the current through the lamp 11 is controlled by the voltage $V_2$ supplied to the reference input of the comparator 20. Thus, the limiter 425 prevents excessive currents from flowing to the lamp 11 by limiting the value of the $V_2$. The voltage limiter 425 may, for example, be a zener diode connected between the output 420 of the divider 400 and ground. The voltage limiter 425 would thus clip the voltage $V_L$ at the output 420 to a maximum value equal to the breakdown voltage of the zener diode.

When the gas discharge lamp 11 is in the warmed-up state and is momentarily extinguished due to power interruption, the voltage necessary to restart it is very large. Therefore, flyback voltage from the inductor 17 will cause the collector voltage on the transistor 14 to rise until the breakdown voltage rating of the transistor 14 is exceeded, causing damage to the transistor. In order to prevent damage to the transistor 14 in this manner, a protective circuit is provided which includes a metal oxide varistor 27 connected between the collector of the transistor 14 and input 465 of a comparator amplifier 470. Another input 475 of the comparator amplifier 470 is connected to a reference voltage source 480, and output 485 of the comparator amplifier 470 is connected to input 490 of an astable multivibrator 495. The output 500 of the multivibrator 495 is connected to shut-down terminal 505 of the voltage regulator 300. If the flyback voltage of the inductor 17 exceeds the breakdown voltage of the varistor 27, the varistor 27 causes a current to flow through resistor 461, and thus a voltage to appear at the positive input 465 of the comparator 470. The voltage of the reference source 480 is selected to be less than the voltage at the input 465 which occurs at breakdown of the varistor 27. Therefore, the comparator amplifier 470 senses a positive difference between its positive input 465 and its negative input 475 and therefore causes a positive signal to appear at its output 485 and at the input 490 of the one-shot multivibrator 495. This causes the multivibrator 495 to change state to produce a negative signal to appear at its output 500 for a predetermined length of time. This negative signal is conducted to the shut-down input 505 of the voltage regulator, which causes the voltage regulator 300 to turn off so that its output voltage $V_1$ goes to zero. At the end of the fixed time period of the multivibrator 495, the multivibrator 495 changes to its stable output state, and consequently the voltage regulator 300 again supplies power to the lamp 11. This cycle will repeat itself if, for example, the lamp 11 is disconnected or fails to ignite. The breakdown voltage of the varistor 27 is preferably selected to be less than the breakdown of the transistor 14, thus preventing damage to the transistor 14.

This protective circuit is necessary because the voltage required to ignite the lamp 11 is much greater when the lamp is warm than when it is cold. Therefore, if the lamp is turned off, it is usually necessary to permit it to cool before reigniting. Thus, during the fixed time period set by the duration of the astable state of the multivibrator 495, during which the voltage regulator 300 is shut down, the lamp 11 is permitted to cool down. Thus, when the regulator 300 is again permitted to turn on, the lamp 11 will ignite and begin to conduct before the flyback voltage of the inductor 17 reaches the breakdown voltage of either the varistor 27 or the transistor 14. On the other hand, if the lamp 11 is either too hot or is not connected, the shut-down cycle of the protective circuit will repeat itself.

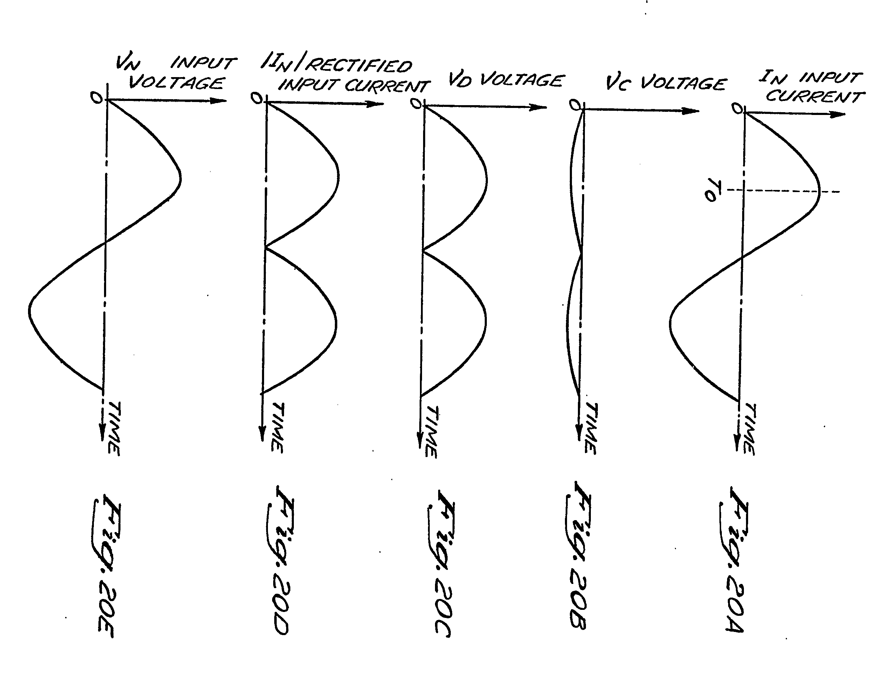

The voltage regulator 300 of Figure 17, includes and AC current converter shown in block diagram form in Figure 19. Power is supplied to the current converter from a 60 Hertz current source to the inputs 600, 605 of the converter. A diode bridge 610 rectifies the 60 Hertz alternating current from a constant current source connected to inputs 610A, 610B to produce a rectified 60 Hertz current at outputs 610C, 610D. As will be seen in the explanation that follows, the current converter, illustrated in Figure 19 regulates the power into a load 665 while presenting a purely resistive input impedance to 60 Hertz alternating current across the input terminals 600, 605.

The current converter of Figure 19 includes a power oscillator comprising a choke 615, a capacitor 620, a transistor 625, a comparator amplifier 630, and a power amplifier 635. The inductance of the choke 615 and the capacitance of the capacitor 620 are preferably selected so that the power oscillator oscillates to switch the transistor at a frequency of approximately 20 kiloHertz.

A sinusoidal 60 Hertz rectified current is produced at the output terminals 610C, 610D of the diode bridge 610. Current flows from output terminal 610D, charges capacitor 620, and flows through inductor 615. If the transistor 625 is on, the current flows from the inductor 615 to ground 640 where it returns through ground 645 and resistor 650 to the terminal 610C. If, on the other hand, the transistor 625 is off, the current flows through diode 655 and is divided between capacitor 660 and the load 665. The current returns from ground 670 to ground 645, through resistor 650, and back to the diode bridge terminal 610C. It may be seen that the proportion of the current flowing from the diode bridge terminal 610D through the load 665 is determined by the duty cycle of the transistor 625. Thus, the current converter controls the amount of current supplied to the load 665 by controlling the duty cycle of the transistor 625.

The base voltage of the transistor 625 is controlled by a comparator amplifier 630 through an inverting amplifier 635 connected to the base of the transistor 625. The negative input 675 of the comparator amplifier 630 is connected to the output terminal 610D through voltage divider resistors 680, 685. The positive input 690 to the comparator amplifier 630 receives positive feedback from the output 695 of the comparator amplifier through voltage divider resistors 700, 705. The comparator amplifier 630 has a saturated output voltage which shall be denoted $V_p$. If the voltage $V_A$ on the negative input 675 exceeds the voltage $V_B$ on the positive input 690, the comparator amplifier 630 will saturate to its maximum negative output, $-V_p$ by virtue of the positive feedback to the input 690. Thus, the voltage at the output 695 will be equal to $-V_p$. On the other hand, if the voltage $V_A$ at the negative input 675 is less than the voltage $V_B$ at the positive feedback input 690, the comparator amplifier 630 will saturate to maximum positive output so that the voltage at its output 695 will be $+V_p$. The output voltage $\pm V_p$ of the comparator amplifier 630 is inverted and amplified by the amplifier 635 and applied to the base of the transistor 625. The positive feedback voltage applied to the positive input 690 is divided by the resistors 700, 705 to:

$$V_p\ (R_{705}/(R_{700}+R_{705})).$$

**0 016 756**

The comparator 630 will switch between its most positive and most negative output voltages $+V_p$ and $-V_p$, whenever the voltage $V_A$ at the negative input 675 is equal to

$$V_p \ (R_{705}/(R_{700}+R_{705})).$$

If the power oscillator is to oscillate by switching the transistor 625 at a frequency of 20 kilohertz, the output of the comparator amplifier 630 at its output terminal 695 must switch back and forth between $+V_p$ and $-V_p$ at the same frequency. This, in turn, requires that the voltage at the negative input terminal 675 must oscillate at a frequency of 20 kilohertz between

$$+V_p \ (R_{705}/(R_{700}+R_{705}))$$

and

$$-V_p \ (R_{705}/(R_{700}+R_{705})).$$

Therefore, it is seen that the voltage at the negative input terminal 675 averaged over one oscillation period must be zero. From this, it follows that the input impedance presented to the 60 Hertz current source across the input terminals 600, 605 is purely resistive, which shall be shown as follows.

The current flowing through the diode bridge 610 between its terminals 610D and 610C shall be defined as $I_N$. The value of the resistors 680, 685 is preferably much larger than the value of the resistor 650 or the resistance of the load 665. Furthermore, the capacitor 620 is preferably selected so that it offers a very high impedance to the 60 Hertz rectified current flowing from the terminals 610D. Therefore, it is seen that voltage $V_c$, at the terminal 610C may be defined as follows:

$$V_c = -R_{650} \ I_N.$$

It has already been seen that the voltage supplied to the negative input terminal 675 averaged over a 20 kilohertz oscillation cycle must be zero, and therefore voltage $V_{755}$, at node 755 must be zero when averaged over an oscillation period. If the voltage at the output terminal 610D is defined as $V_D$, it may be easily shown from the foregoing that:

$$V_D = R_{650} \ I_N((R_{680}/R_{685})+1)$$

Defining the input voltage between the input terminals 600, 605 to be $V_N$, it is seen that:

$$V_N = V_D - V_c.$$

From this it follows that:

$$V_N = I_N \ R_{650} \ ((R_{680}/R_{685})+1)$$

Recognizing the ratio of $V_N$ to $I_N$ as the resistance between the terminals 600, 605, it is seen that the current converter of Figure 19 offers a purely resistive input impedance to the 60-Hertz current source connected to the input terminals 600, 605, and that this resistance is determined by the resistance of the resistors 650, 680, and 685. This feature is particularly advantageous in the voltage regulator 300 because it substantially eliminates the occurrence of reactive power losses typically present whenever reactive components, such as inductors or capacitors, change the phase of the current with respect to the voltage, resulting in inefficient use of the electrical power.

From the foregoing it may be easily shown that the power consumed by the voltage regulator 300 incorporating the current converter of Figure 19 is

$$V_N \ I_N = I_N^2 \ R_{650} \ ((R_{680}/R_{685})+1).$$

From this it is seen that the power consumed by the current converter is independent of the resistance of the load 665, and thus the current converter of Figure 19 regulates the power consumed and prevents changes due to load resistance variations.

Figure 20 illustrates various current and voltage waveforms in various points in the current converter near the diode bridge 610. The input current $I_N$ supplied to the input terminals 600, 605 is illustrated in Figure 20A as a 60 Hertz sinusoid. In Figure 20B, the voltage at the terminal 610C, $V_C$ which has been seen to equal $-I_N \times R_{650}$, is plotted as a rectified 60-Hertz sinusoid of negative polarity. As discussed above, $V_D$ is equal to

$$I_N \ R_{650} \ ((R_{680}/R_{685})+1),$$

and $V_D$ is plotted in Figure 20C as a 60-Hertz sinusoid of positive polarity. The current flowing from the terminal 610D to the terminal 610C is a function of $I_N$ and is plotted in Figure 20D as a 60-Hertz rectified sinusoid of positive polarity. Figure 20E is a plot of $V_N$, as it appears across the inputs 600, 605. It is significant that the waveform of the plot of Figure 20E is in phase with the waveform of the plot of Figure 20A, because the input voltage and the input current are in phase with one another. This in-phase relationship is a result of the fact that input impedance presented by the current converter of Figure 19 to the 60-Hertz input current at the input terminals 600, 605 is purely resistive. This assures maximum efficient use of power by the current converter and prevents reactive power losses.

A description of the operation of the power oscillator of the current converter of Figure 19 may begin with a current $I_D$ flowing from the terminal 610D and a voltage $V_A$ at the negative input 675 to comparator 630 which is greater than the positive feedback voltage $V_B$ at the positive input terminal 690. The comparator 630 will sense a negative difference at its inputs and produce a negative output voltage $-V_p$ at its output 695. The amplifier 635 will invert the $V_p$ output voltage to a positive voltage and this positive voltage will be applied to the base of the transistor 625. The transistor 625 responds to the positive voltage at its base by turning on and conducting current to ground 640. Thus, the current $I_N$ will flow through the transistor 625 to ground 640. This current returns through ground 645 through resistor 650 to the return terminal 610C. The capacitance of the capacitor 620 is preferably selected to operate a high impedance to the 60-Hertz current but provides some smoothing to the 60-Hertz ripple in $I_N$. Thus, the 60-Hertz $I_N$ essentially does not flow through the capacitor 620. Because the transistor 625 has been turned on, the current $I_N$ is permitted to bypass the resistance of the load 665, and is offered a low resistance path directly through the resistor 650 and back to the return terminal 610C. As a result, the current through the inductor 615 increases, causing the capacitor 620 to discharge through the inductor 615 to contribute to the increased current drawn through the inductor 615. As a result, the potential across the resistor 710 decreases and becomes negative as the capacitor 620 discharges. Likewise, the voltage at the negative input 675 to the comparator 630 decreases and becomes negative. The negative voltage at the input 675 will continue to increase in magnitude until it equals the negative voltage supplied through the feedback resistor 700 to the positive terminal 690,

$$-V_p \ (R_{705}/(R_{700}+R_{705})).$$

As soon as the comparator 630 senses that the voltage at its two inputs 675, 690 are equal, it switches to its most positive input voltage, $+V_p$. The positive output voltage $V_p$ is inverted and amplified by the amplifier 635 and applied to the base of the transistor 625. The resulting negative voltage causes the transistor 625 to turn off, thereby forcing the current through the inductor 615 to be divided between the capacitor 660 and the load 665.

At this point, the current flowing from the terminal 610D through the inductor 615 is now presented with a higher resistance, and it therefore begins to decrease over a period of time at a rate controlled by the inductance of the inductor 615. As a result of this decrease in current, the capacitor 620 no longer discharges but instead begins to be charged by current flowing from the terminal 610D. As a result, the voltage across the capacitor 620 begins to increase. This causes an increase in voltage across the resistor 720 and an increase in the voltage $V_D$ at the terminal 610D. The voltage $V_A$ at the negative input 675 of the comparator 630 begins to increase, and continues to increase until it equals the voltage $V_B$ at the positive feedback terminal 690. As soon as the voltage at the negative input 675 has increased to equal the voltage at the positive feedback input 690, the comparator 630 changes state so that its output saturates to $-V_p$, and the entire cycle repeats itself. The comparator 630 switches its output between $+V_p$ and $-V_p$ at a frequency of approximately 20 kilohertz, which is a frequency controlled by the inductance of the inductor 615 and the capacitance of the capacitor 620. The frequency of the oscillation, while preferably near 20 KHz, is also proportional to the 60 Hertz input current $I_N$ flowing from the terminal 610D. Thus, the power oscillator will oscillate in the above-described manner at a frequency slightly less than 20 KHz when the 60 Hertz current $I_N$ nears its minimum value and will oscillate at a frequency somewhat greater than 20 KHz when $I_N$ reaches its peak value. Thus, the oscillation frequency of the power oscillator is slightly modulated by the 60 Hertz line frequency cycle.

Figure 21A is the same plot as Figure 20A except that the time scale is greatly expanded so that the 60 Hertz sinusoid appears to be a straight line. Figure 21B illustrates the voltage across the transistor 625. The waveform of the transistor voltage is a nearly square wave having a frequency of 20 kilohertz corresponding to the frequency of the power oscillator. Figure 21C illustrates three plots. The plot labeled $V_{720}$, Fig. 21C, is a plot of the voltage across the resistor 720 as a function of time. This clearly shows that when the transistor is turned on at time $T_0$, the current discharging through the capacitor 620 causes the voltage $V_{720}$ across the resistor 720 to decrease and become more negative until the comparator 630 switches at time $T_1$. At time $T_1$, the transistor is turned off, and the capacitor 620 begins to charge, causing the voltage $V_{720}$ across the resistor 720 to increase until it becomes positive. As is apparent in Figure 21C, the voltage $V_{720}$ increases until the comparator 630 switches back to its negative output state. As previously discussed, the capacitance of the capacitor 620 is preferably selected so that variations in voltage across the capacitor are minimal and the capacitor offers significant impedance to the 20 KiloHertz oscillating current. Accordingly, in Figure 21C, the plot of the voltage across the capacitor, labeled $V_{620}$, appears as a straight line. Another plot in Figure 21C is labeled $V_D$, the voltage at the output 610D. $V_D$ is the sum of the voltage across the capacitor, $V_{620}$, plus the voltage across the resistor $V_{720}$ and is superimposed on the two plots, $V_{720}$ and $V_{620}$ in Figure 21C.

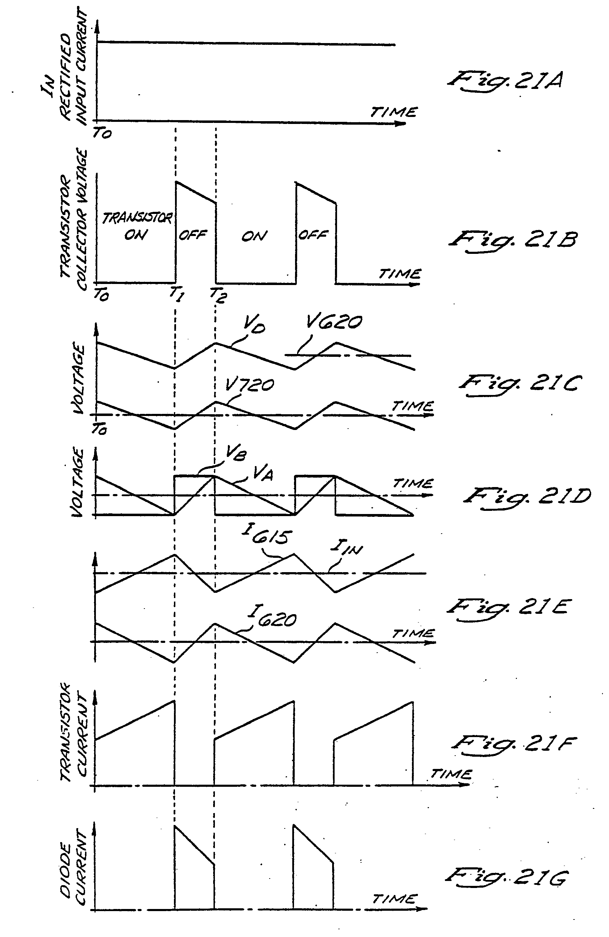

The plot of Figure 21D illustrates the voltage $V_A$ at the negative input to the comparator 630 and the voltage $V_B$ at the positive terminal 690 of the comparator 630. $V_B$ alternates between

$$-V_p \ (R_{705}/(R_{700}+R_{705})) \ \text{and} \ +V_p \ (R_{705}/(R_{700}+R_{705})).$$

$V_A$ must oscillate between these same two limits. Figure 21D clearly shows the comparator 630 changes state only when $V_A=V_B$, which occurs alternately at the upper and lower peak voltages of $V_B$. This, it is apparent that $V_A$ is constrained to the upper and lower limits of $V_B$. It may be easily shown that the positive and negative peak values of the voltage $V_{720}$ are plotted in Figure 21C are constrained to

$$\pm V_p \ (R_{705}/(R_{700}+R_{705})) \ ((R_{680}+R_{685})/R_{685}).$$

Thus, the magnitude of the oscillation of the power oscillator is controlled by the maximum voltage output $V_p$ of the comparator 630. The resulting current waveforms are illustrated in Figure 21E. The plot labeled in Figure 21E as $I_{620}$ is defined as the current through the capacitor 620. As already discussed, the capacitor 620 presents a very high impedance to the 60 Hertz input current $I_N$ but presents a very low impedance to the 20 kilohertz oscillating current. Therefore, the current $I_{620}$ through the capacitor 620 oscillates at a frequency of 20 kilohertz about zero. The current $I_{625}$ through the choke 615 is equal to the difference between the input current $I_N$ flowing through the output terminal 610D and the current $I_{620}$ flowing through the capacitor 620. Therefore, the plot labeled $I_{615}$ in Figure 21E may be derived by subtracting the plot of $I_{620}$ in Figure 21E from the plot of the current $I_N$ in Figure 21A. Figure 21E shows that while the current $I_{615}$ to the inductor 615 is always positive the 20 kHz oscillation in $I_{615}$ causes the current $I_{620}$ through the capacitor 620 to oscillate about zero current.

Figure 21F is a plot of the current through the transistor 625, and it is seen that during the time that the transistor 625 is turned on, between time $T_0$ and $T_1$, the current through the transistor 625 follows the current $I_{615}$ through the inductor 615 plotted in Figure 21E. The current through the diode 655 is plotted in Figure 21G and it is seen that the current through the diode 655 follows the current $I_{615}$ through the inductor 615 while the transistor 625 is turned off. The current through the diode 655 is divided between the load 665 and the capacitor 660. Because the relationship

$$E_N I_N = I_N{}^2 \ R_{450} \ ((R_{480}/R_{485}) + 1)$$

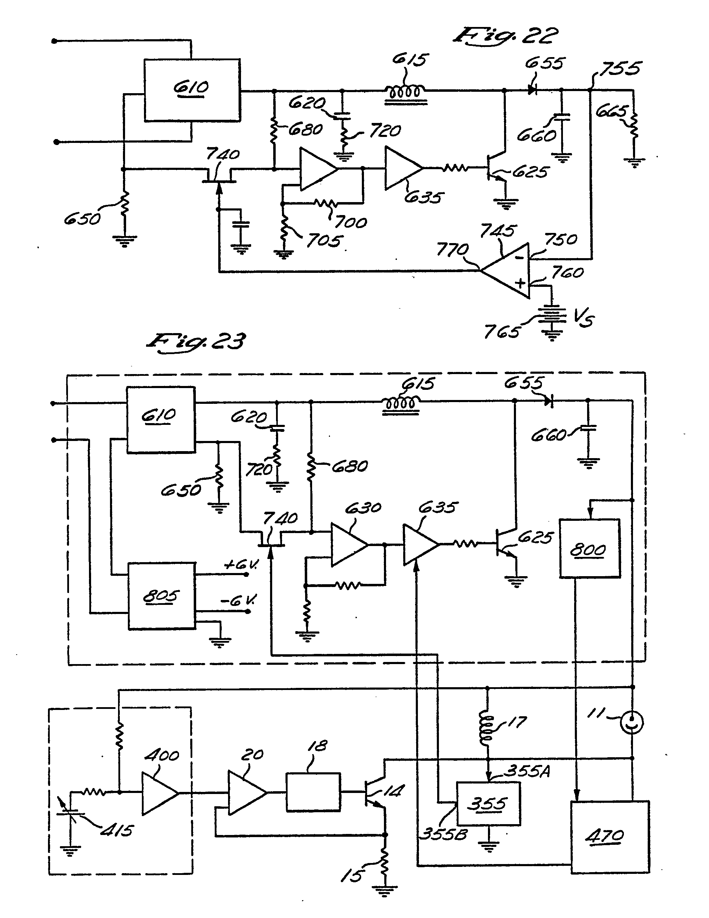

was established supra, defining the input power, and because it can be shown that the losses in inductor 615, transistor 625, and diode 655 are small, and relatively constant, it follows that the output power is constant and the output current $I_1$ and voltage $V_1$ may be controlled by controlling the resistance of $R_{685}$. In fact, the resistance of $R_{685}$ may be varied in a feedback control loop designed to control the output current or voltage of the current converter of Figure 19. Such a concept is illustrated in Figure 22.

In Figure 22, the resistor 685 is replaced instead by a field effect transistor 740. In the exemplary embodiment of Figure 22, the transistor 740 is an N-channel field effect transistor. The feedback control loop consists of a differential amplifier 745 having its negative input 750 connected to output 755 of the current converter of Figure 19. Positive input 760 of the amplifier 745 is connected to a reference voltage $V_s$ provided by a source 765. The output 770 of the amplifier 745 is connected to the gate of the field effect transistor 740. The current converter of Figure 19 together with this feedback loop comprise the voltage regulator 300 of Figure 15. The feedback loop, including the amplifier 745 acts as a supply voltage feedback control loop and controls the output voltage $V_1$ at the output 755 of the voltage regulator of Figure 22.

The operation of the feedback loop is as follows. If $V_1$ exceeds $V_s$, the amplifier 745 will sense a negative difference between its inputs 750, 760 and will produce a negative voltage at its output 770 proportional to the difference between $V_s$ and $V_1$. This negative voltage is applied to the gate of the field effect transistor 740, which causes the resistance of the transistor 740 to increase. This is equivalent to an increase in the resistance of $R_{685}$ in Figure 19. The peak value of $I_{615}$, being inversely proportional to $R_{685}$, will be decreased. Likewise, if the output voltage $V_1$ is less than $V_s$, the amplifier 745 will sense a positive difference between its inputs and apply a positive voltage to the gate of the field effect transistor 740, thereby causing a decrease in the resistance of the field effect transistor 740. This will cause a consequent increase in the power delivered to the load 665. It has already been seen that this power varies according to the ratio of $1/R_{685}$. Variations in the resistance of the field effect transistor 740 are equivalent to the variation in the resistance of $R_{685}$. Thus, it is seen that the output power and consequently the voltage $V_1$ supplied to the load 665 are readily controlled by controlling the resistance of the field effect transistor 740 in the supply voltage feedback control loop.

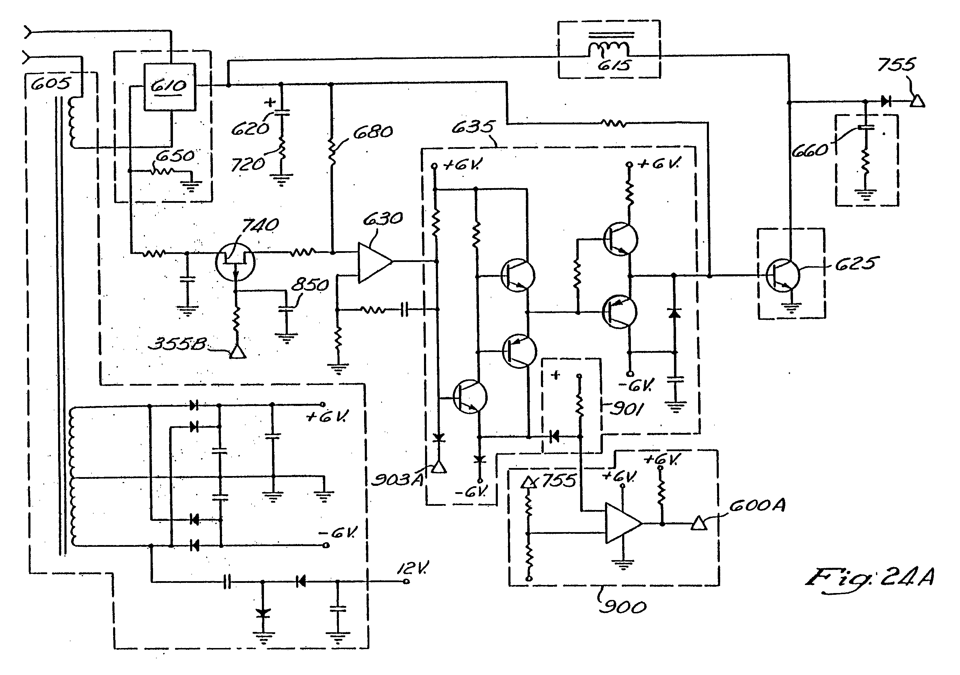

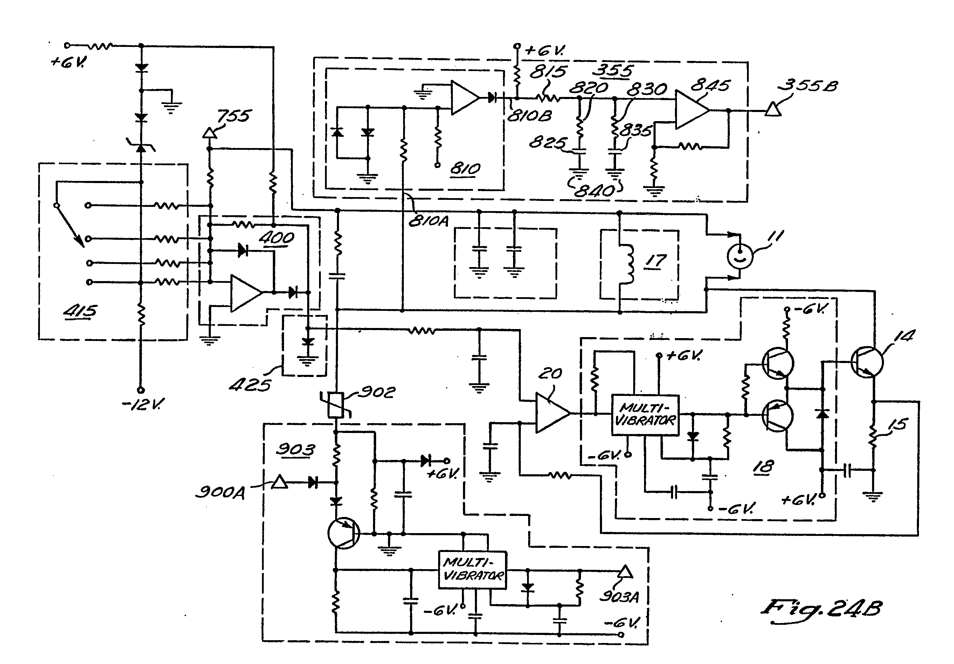

A high frequency symmetrically regulated lamp control circuit illustrated in Figure 24 has been built to include the foregoing features, and Figure 23 is a simplified block diagram of that circuit. Essentially, the circuit of Figure 23 includes the circuit illustrated in the block diagram of Figure 17 in which the voltage regulator of Figure 22 is used as the voltage regulator 300 of Figure 17. Thus, the circuit of Figure 23 is a combination of the circuits illustrated in Figures 15 and 22, and includes, in addition, an over-voltage detector 800 which protects the electrolytic capacitor 600, and a 6 volt DC power supply 805 to operate the electronics in the various components of the circuit in the block diagram of Figure 22.

In Figure 23, the supply voltage feedback control loop includes a symmetry detector 355 having its input 355a connected to the collector of transistor 14 and its output 355b connected to the gate of the field effect transistor 740. As discussed above, in connection with Figures 19 and 22, the field effect transistor 740 replaces the resistor 685 of Figure 19 to provide variable control over the value of the output voltage $V_1$. It will be remembered that the value of $V_1$ is controlled by the ratio $(R_{680}+R_{685})/R_{685}$. The value of $R_{685}$ is controlled by changing the resistance of the transistor 740.

The details of the symmetry detector 355 are best seen by reference to Figures 24A and 24B. Figure 24B shows that the symmetry detector 355 includes an amplifier circuit 810 having its input 810a connected to the collector of the transistor 14. Output 810a of the amplifier circuit 810 is connected through resistor 815 to resistor and capacitor pairs 820, 825 and 830, 835. Both capacitor resistor pairs, 820, 825 and 830, 835 are connected between ground 840 and the positive input to amplifier 845. The output 355B of amplifier 845 is connected across capacitor 850 to the gate of the field effect transistor 740 (Fig. 24A).

The amplifier circuit 810 produces an output voltage of plus 6 volts at its output 810B whenever the transistor 14 is off, and produces an output voltage of minus 6 volts at its output 810B whenever the transistor 14 is on. The current flowing from the output 810B charges the capacitors 825, 835 to a positive or negative voltage depending upon the polarity of the voltage at the output 810B. It follows that the magnitude and polarity of the voltage on the capacitors 825, 835 is determined by the difference between the off time of the transistor 14 and its on time. Thus, if the on time of the transistor 14 is greater than its off time, the voltage across the capacitors 825, 835 will be negative, since a negative charge will be accumulated at the ungrounded plates of the capacitors 825, 835. On the other hand, if the off time of the transistor 14 exceeds its on time, a net positive charge will be accumulated at the ungrounded plates of the capacitor 825, 835, and a positive voltage will appear across these capacitors. The voltage appearing across the capacitors 825, 835 is amplified and scaled by the amplifier 845. The output 355B of the amplifier 845 is applied across the capacitor 850 to the gate of the field effect transistor 740. If the off time of the transistor 14 exceeds its on time, it is seen that the output of the amplifier 845 will be positive, and will cause the voltage across the capacitor 850 to increase to a higher positive value. The transistor 740 in the embodiment of Figure 24 is preferably a P-channel field effect transistor. Therefore, the increasingly positive voltage across the capacitor 850, which is applied to the gate of the transistor 740 causes the resistance of the transistor 740 to increase. As discussed above, the output voltage $V_1$ of the voltage regulator 300 (Fig. 19) is controlled by the resistance of the transistor 740, and therefore $V_1$ will decrease. The on time of the transistor 14 will begin to increase, causing a corresponding decrease in the positive voltage across the capacitors 825, 835 and a corresponding decrease in the positive output voltage of the amplifier 845. Thus, the rate at which the capacitor 850 is charged slowly decreases until the on time of the transistor 14 is nearly equal to its off time. At this point, the net charge accumulated on the capacitors 825, 835 is almost zero. Thus, the amplifier 845 no longer increases the voltage across the capacitor 850 and therefore the voltage applied to the gate of the transistor 740 becomes constant. This stabilizes the transistor 740 and stabilizes the output voltage $V_1$ of the voltage regulator 300. At this point, $V_1$ equals $V_s$, the symmetry voltage of the lamp.

Conversely, if the on time of the transistor 14 is greater than its off time, a negative voltage will begin to appear across the capacitors 825, 835, causing the output from the amplifier 845 to become negative. Thus, the amplifier 845 begins to decrease the voltage across the capacitor 850 and continues to do so until the resistance of the transistor 740 has increased sufficiently to cause the output voltage $V_1$ of the voltage regulator 300 to decrease, causing a corresponding increase in the on time of the transistor 14. The feedback loop is stabilized as soon as the on time has increased to equal the off time of the transistor 14. At this point, the net voltage across the capacitors 825, 835, is null, and, as a result, the amplifier 845 no longer reduces the charge on the capacitor 850. Thus, the voltage at the gate of the transistor 740 and the corresponding resistance of the transistor 740 is stabilized corresponding to a stabilized value of the output voltage $V_1$ which is equal to the symmetry voltage $V_s$ of the lamp.

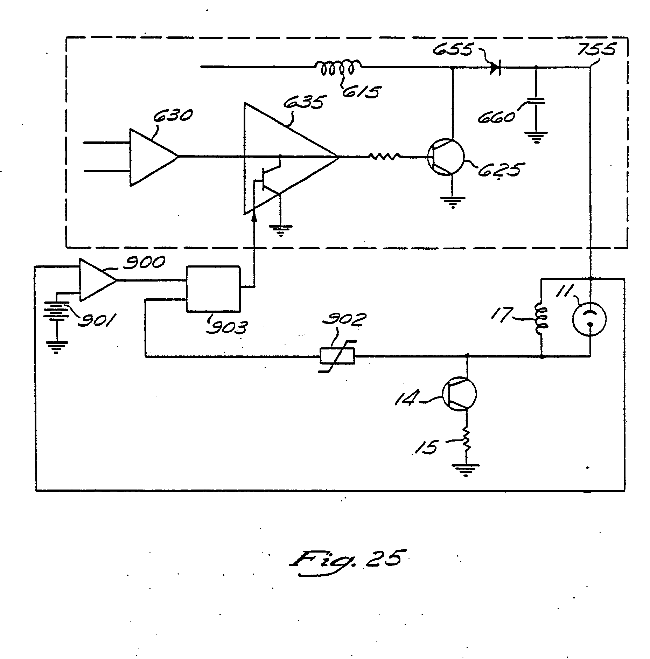

A shut-down circuit is illustrated in the detailed schematic in Figure 24 and includes a comparator circuit 900 (Fig. 24A), a reference voltage source 901, a varistor 902 (Fig. 24B), a multivibrator circuit 903 connected at 903A to amplifier circuit 635 (Fig. 24A) and is somewhat different from the shut-down circuit discussed above in connection with Figure 17. As discussed above in connection with Figures 19 and 22, the output of the comparator 630 is conditioned by the amplifier circuit 635 to control the transistor 625. As discussed above in connection with Figure 17, the shut-down circuit operates to shut-down the output of the voltage regulator 300. The shut-down circuitry of Figure 24 is shown in simplified block diagram form in Figure 25. The varistor 902 is connected between the · collector of the transistor 14 and the input to the multivibrator circuit 903. The output of the multivibrator circuit 903 is connected to the amplifier 635. Another input to the multivibrator circuit 903 is controlled by the output of the comparator 900. One input of the comparator amplifier 900 is connected to the output 755 of the voltage regulator 300. The other input to the comparator amplifier 900 is connected to the reference voltage source 901. The shut-down circuit illustrated in Figure 14 will null the output voltage $V_1$ at the output 755 of the voltage regulator 300 for a duration of predetermined length if either the output voltage $V_1$ of the voltage regulator 300 exceeds a magnitude defined by the reference voltage source 901 or if the collector voltage of the transistor 14 exceeds the breakdown voltage of the varistor 902. The operation of the shut-down circuit is as follows. The comparator amplifier 900 produces a voltage output which is proportional to the voltage difference between its two inputs. If the output voltage $V_1$ of the voltage regulator 300 exceeds the magnitude defined by the reference voltage source 901, the comparator amplifier 900 will output a positive voltage to the input of the multivibrator circuit 903. The multivibrator circuit 903 will respond by changing state to produce an output signal to the amplifier 635 which causes the amplifier 635 to hold the voltage at the base of the transistor 625 to a positive value in order to hold the transistor 625 on. At the end of a predetermined length of time, the multivibrator returns to its original state, so that the amplifier 635 no longer holds the transistor 625 in its on state. While the transistor 625 is held in its on state, all the current flowing through the inductor 615 is returned to ground through the transistor 625, thereby causing the output voltage $V_1$ of the voltage regulator 300 to drop to zero. Thus, the output voltage is nulled during the predetermined length of time defined by the astable state of the multivibrator circuit 903. Similarly, if the collector voltage of the transistor 14 exceeds the breakdown voltage of the varistor 902 the varistor 902 will break down causing this voltage to appear at the input to the multivibrator circuit 903. Again, the multivibrator circuit 903 will switch to its astable state and cause the output voltage $V_1$ to be zero for a predetermined length of time in the same manner. The comparator amplifier 900 prevents the output voltage $V_1$ from exceeding the capacity of the capacitor 660, thereby protecting the capacitor 660. This is an important feature because the capacitor 660 is preferably a large electrolytic capacitor which smooths the output voltage $V_1$ of the voltage regulator 300. The varistor 902 prevents the collector voltage on the transistor 14 from exceeding the breakdown voltage of the transistor. Preferably, the breakdown voltage to the varistor 902 is less than the breakdown voltage to the transistor 14. This feature is useful because, if the lamp 11 were to be momentarily disconnected then reconnected, the re-ignition voltage of the warm lamp 11 would exceed the breakdown voltage of the transistor 14. The shut-down circuit of Figure 25 causes the voltage regulator 300 to turn off before the collector voltage can damage the transistor 14. It shuts the voltage regulator 300 off for the predetermined length of time defined by the multivibrator circuit 903 during which the lamp 11 has an opportunity to cool. When the lamp 11 has sufficiently cooled, its re-ignition voltage is less than the breakdown voltage of the transistor 14, and the voltage regulator 300 may then be turned back on. The shut-down circuit may cycle several times while the lamp 11 has a chance to cool sufficiently.

While Figure 24 illustrates the currently preferred embodiment of the invention, it should be recognized that the invention may be implemented in a number of different ways to provide a symmetrically regulated voltage source. For example, in the embodiment of Figure 24 the field effect transistor 740 is a p-channel FET, whereas, if the output of the symmetry detector 355 is inverted, the transistor 740 may be an N-channel FET.

E. Capacitive discharge ignition circuit and constant power regulation

The control circuit of Figure 1 is particularly suited for use with low intensity, low pressure mercury vapor fluorescent lamps. However, when used to control various other types of gas discharge lamps such as high pressure mercury vapor, high or low pressure sodium, and metal Halide lamps, significant problems may arise.

One problem with the lamp control circuit of the Figure 1 is that, if the lamp voltage illustrated in Figure 3D during the flyback mode of the circuit from $T_0$ to $T_A$ is of insufficient magnitude to ignite lamp 11 when the switch 19 is first closed, then other means must be provided to furnish a sufficiently high voltage to ignite the lamp when the circuit is first activated. A typical high intensity discharge lamp such as a 400-watt high pressure sodium lamp, requires approximately 2500 volts across the lamp in order to ignite the lamp. One solution may be found by looking to prior art fluorescent lamp ballasts which operate at 60-Hertz and which must of necessity use very large and heavy inductors. In these prior art ballast circuits, the common technique for igniting the fluorescent lamp is to connect the secondary winding of a step-up transformer in series with the lamp, and connect the primary winding to a capacitive discharge device. Such a scheme presents insignificant problems in these prior art heavy ballast circuits because the additional inductance of the secondary winding is small compared to the inductance already present in the ballast. Furthermore, these prior art 60-Hertz ballast circuits do not fly back, as does a lamp circuit operating at 20 kHz as may a circuit according to the invention. As will be seen in a later portion of this description, the flyback cycle of the lamp control circuit creates special problems when the step-up transformer is introduced.

Figure 26 illustrates a circuit which provides the ignition voltage of 2500 volts in a lamp control circuit similar to the control circuit as illustrated in Figure 1 but using a high voltage ignition circuit similar to that used with prior art lamp ballast circuits. The high voltage ignition circuit includes a step-up transformer 950 having a primary winding 951 and a secondary winding 952. The secondary winding 952 is connected in series with the gas discharge lamp 11 while the primary winding 951 is connected to a pulse voltage source 953, which may, for example, be a capacitive discharge device. Control circuit 949 of Figure 26 includes the control components of Figure 1 including the multivibrator 18, the comparator amplifier 20, the potentiometer 23, and the reference voltage source 24.

The pulse transformer 950 has a step-up ratio which is sufficient to provide 2500 volts for the lamp 11. Thus, when it is desired to ignite the lamp 11, the capacitive discharge device 953 provides a high voltage pulse to the primary winding 951, which is stepped up by the pulse transformer 950 to approximately 2500 volts across the secondary winding 952. This 2500 volts appears across the lamp 11, and causes the gas inside the lamp 11 to begin to ionize. If the first voltage pulse from the capacitive discharge device 953 is insufficient to completely ignite the lamp, the process will be repeated until ionization in the lamp is complete and the lamp 11 begins to conduct. At this point, the remainder of the control circuit may begin to function as described above in connection with Figures 1, 2, and 3.

Unfortunately, the control circuit of Figure 26 has the disadvantage that, after the lamp 11 has ignited, current through the lamp 11 will cause a current to be induced through the primary winding 951 having a large magnitude corresponding to the large step-up ratio of the transformer 950. As a result, a significant power loss will occur through the transformer 950. This will decrease the efficiency of the control circuit of Figure 26 significantly. A solution to this problem is to provide a switch 954 which may be opened to prevent current from flowing through the primary winding 951. However, after the switch 954 has been opened, the secondary winding 952 now acts as a large inductor in series with the lamp in addition to the inductor 17.

At this point, the undesirability of applying the starting circuit used in prior art 60-Hertz lamp ballast circuits to the high frequency switching circuit of Figure 1 is apparent. One significant feature of the high frequency switching circuit of Figure 1 is that the circuit flies back at a frequency of 20-kiloHertz, and as a result the inductance of the inductor 17 may be very small in comparison with the large inductors typically used in prior art 60-Hertz lamp ballast circuits. Because the lamp ballast circuits of the prior art typically have large inductors, introduction of the secondary winding of the step-up transformer of the ignition circuit did not represent a significant increase in the inductance of the circuit, and therefore, introduction of the high voltage ignition circuit into the prior art ballast circuits did not change the operation of these circuits significantly. In contrast, the addition of the secondary winding 952 to 20-kiloHertz lamp control circuit of Figure 26 represents a significant increase in the inductance in the circuit because the inductor 17 is relatively small. Furthermore, unlike the 60-Hertz ballast circuits of the prior art, the 20-kilo-Hertz control circuit of Figure 1 flies back each 20-kiloHertz cycle. This creates special problems in introducing the step-up transformer 950 in series with the lamp 11 which are peculiar to the 20-kiloHertz control circuit of Figure 26, and which were not encountered with the prior art 60-Hertz ballast circuits. During the flyback cycle of the 20-kiloHertz control circuit of Figure 26, when the transistor 14 is turned off, the flyback voltage of the inductor 17 must cause a reversal of the direction of the current in the lamp 11. The magnetic field in the secondary winding 952 opposes the current flowing through the lamp 11 during this flyback cycle, thereby increasing the impedance to the current flowing through the lamp 11, thus reducing the efficiency of the control circuit of Figure 26. Furthermore, the inductance of the secondary winding 952 represents a significant increase in the total inductance of the control circuit of Figure 26, which corresponds to a significant increase in the flyback voltage impressed across the transistor 14 and the varistor 27. This increases in flyback voltage causes the varistor 27 to conduct more current to ground during the flyback cycle of the circuit of Figure 26, representing a further loss in efficiency of this circuit of Figure 26. Thus, it is apparent that introduction of the high voltage ignition circuit used in prior art 60-Hertz ballast circuits into the 20-kiloHertz lamp control circuit of Figure 1, as illustrated in Figure 26, significantly reduces the efficiency of the 20-kiloHertz lamp control circuit.

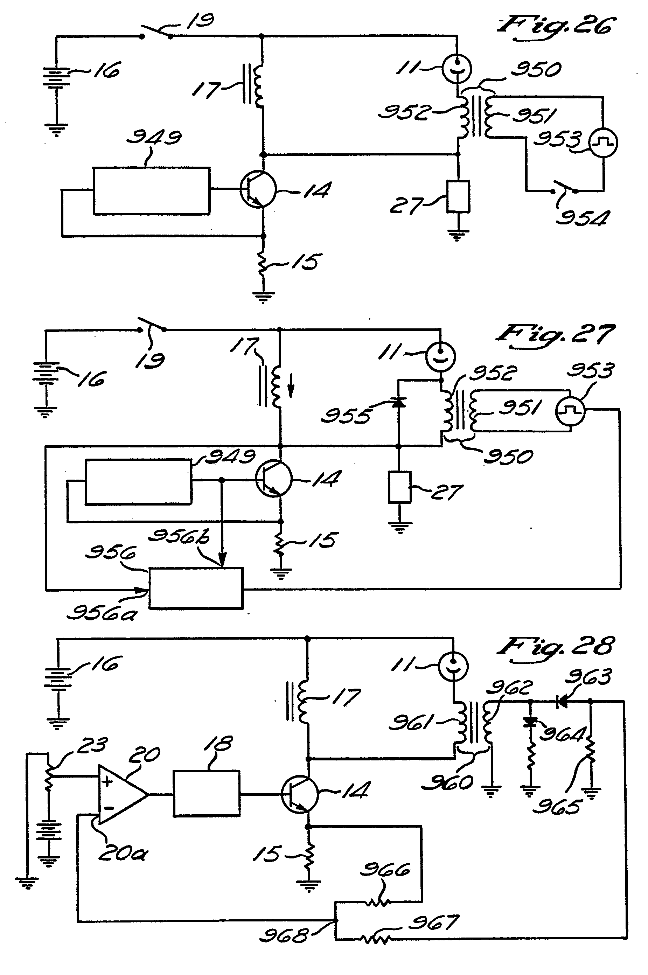

The circuit of Figure 27 illustrates an embodiment of the invention in which the foregoing problems are solved. The control circuit of Figure 27 includes a lamp control circuit similar to the lamp control circuit of Figure 1, and further includes a pulse transformer 950 having its primary winding 951 connected across a pulse voltage source 953 such as a capacitive discharge device and a secondary winding 952 connected in series with the lamp 11. In addition, the circuit includes a rectifying diode 955 connected across the secondary winding 952, and a control circuit 956.

The diode 955 may be any rectifying means, and has its polarity disposed so as to permit current flowing from the inductor 17 to the lamp 11 when the transistor 14 is turned off to flow through the diode 955 and bypass the secondary winding 952 and provides an alternative path for current flowing in the secondary winding 952 during the flyback cycle. The diode 955 maintains a substantially constant current through the secondary winding 952 so that the winding 952 does not present any substantial impedance or energy loss during the charging cycle of the circuit. This feature substantially prevents the inductance of the secondary winding 952 from affecting the operation of the lamp control circuit during its normal operating mode after the lamp 11 has been ignited.

The control circuit 956 controls the operation of the pulsed voltage source 953. The control circuit 956 has one of its inputs 956a sensing the collector voltage on the transistor 14, while its other input 956b senses the output from the control circuit 949 to the base of the transistor 14.

Operation of the circuit of Figure 27 is as follows. When the circuit is first activated and the lamp 11 is to be ignited, a large flyback voltage appears across the transistor 14 as discussed above in connection with Figures 1, 2, and 3. Input 956a and the control circuit 956 sense that the lamp 11 is off by sensing this large collector voltage, which means that the voltage source 953 must be activated to ignite the lamp. The control circuit 956 will activate the pulse voltage source 953 only after the transistor 14 is turned back on, in order to prevent the large ignition voltage from the pulse transformer 950 from imposing a large collector voltage on the transistor 14. When the transistor 14 is on, this is sensed at the input 956b of the control circuit 956 by sensing the output voltage of the control circuit 949 to the base of the transistor 14. At this time, the control circuit 956 causes the pulsed voltage source 953 to impose a voltage in the primary winding 951, which is of sufficient magnitude to cause an ignition voltage of 2500 volts on the secondary winding 952. This ignition voltage causes the gas in the lamp 11 to begin ionization. If this ionization is not complete, then during the next cycle of the lamp control circuit the control circuit 956 will again sense that the lamp is still nonconducting by a high collector voltage of the transistor 14 sensed at input 956a. Again, as soon as the base voltage of the transistor 14, sensed by input 956b, indicates that the transistor 14 is on, the control circuit 956 will reactivate the pulsed voltage source 953 causing the pulse transformer 950 to produce a 2500-volt ignition pulse for a duration determined by the pulsed voltage source 953. This cycle will repeat itself until the lamp 11 has ionized sufficiently to permit a normal driving of the lamp 11 with only the driving circuit 949.

This circuit has the advantage that, after the lamp 11 is ignited, the inductance of the secondary winding 952 does not affect the operation of the lamp control circuit. The operation of the circuit of Figure 27 when the lamp 11 is ignited is as follows: After ignition of the lamp 11, the control circuit of Figure 27 assumes its normal operating mode similar to that described above in connection with Figures 1 and 3, and the secondary winding 952 effectively becomes an inductor, as the control circuit 956 opens the primary winding 951 to effectively take it out of the circuit. During the charging portion of the 20-kiloHertz cycle of the control circuit of Figure 27, when the transistor 14 is on, current flows from the power supply 16 and is divided between the inductor 17 and the lamp 11. Part of the current flows through the inductor 17 and the transistor 14 to ground, while the remaining current flows through the lamp 11, the secondary winding 952, and the transistor 14 to ground. During this charging cycle, the current through the transistor 14 will increase as the magnetic fields in the inductor 17 and the secondary winding 952 increase. During the flyback portion of the 20-kiloHertz cycle of the control circuit of Figure 27, when the transistor 14 is off, the current flowing through the inductor 17 flows through the diode 955 and the lamp 11, thereby completely bypassing the secondary winding 952. As a result, the magnetic field in the secondary winding 952 cannot oppose the current flowing through the lamp 11 during the flyback cycle. Furthermore, the diode 955 shunts the current flowing in the secondary winding 952, thereby preventing this current from affecting the operation of the control circuit of Figure 27. As a result, the current through the secondary winding 952 does not significantly decrease during the flyback cycle. Therefore, when the transistor 14 is again turned back on, the current supplied from the power source 16 flowing through the lamp 11 is not required to significantly change the current flowing through the secondary winding 952. As a result, current in the secondary winding remains fairly constant and the secondary winding 952 does not present a significant impedance to the current flowing through the lamp 11 during the charging portion of the 20-kiloHertz cycle. Therefore, the secondary winding 952 does not absorb significant power from the power source 16.

It is now apparent that the shunting diode 955 prevents the inductance of the secondary winding 952 from affecting operation of the control circuit of Figure 27 during either the charging portion or the flyback portion of the 20-kiloHertz cycle. Furthermore, because the diode 955 shunts the current across the secondary winding 952 during the flyback cycle, the inductance of the secondary winding 952 does not contribute to the flyback voltage across the transistor 14. Instead, only the inductor 17 contributes to the flyback voltage across the collector of the transistor 14, as in the circuit of Figure 1, even though the circuit of Figure 27 includes the pulse transformer 950 in series with the lamp 11 having a very high step-up ratio. This embodiment thus includes a source producing a high ignition voltage across the lamp 11 which does not increase the flyback voltage in the lamp control circuit.

Another problem inherent in the control circuit of Figure 1 is that the power consumed by the circuit is dependent upon the effective resistance of the gas discharge lamp 11. It is well known that if the control circuit oscillates at a high frequency, the lamp 11 may be characterized as a resistor. For high pressure mercury vapor lamps, this equivalent resistance is relatively constant over the life of the lamp. The problem arises when a high pressure sodium lamp is used as the lamp 11 in the circuit of Figure 1. The resistance of high pressure sodium lamps increases over the life of the lamp. For example, if the lamp 11 in Figure 1 is a high pressure sodium lamp, and if the potentiometer 23 of Figure 1 is first adjusted so that the control circuit of Figure 1 furnishes 400 watts of power to the lamp 11, the voltage drop across the lamp when new would be approximately 95 volts. However, during the life of the lamp, this voltage can increase to 135 volts. This is because the lamp control circuit maintains a constant current through the lamp and choke parallel combination even though the lamp resistance increases. For example, as the lamp resistance increases, the control circuit of Figure 1 will increase the lamp voltage, plotted in Figure 3D, so that the current through resistor 15, plotted in Figure 3C, does not change. This voltage increase corresponds to an increase in the power consumed, and a significant increase in the cost of operating the lamp control circuit.

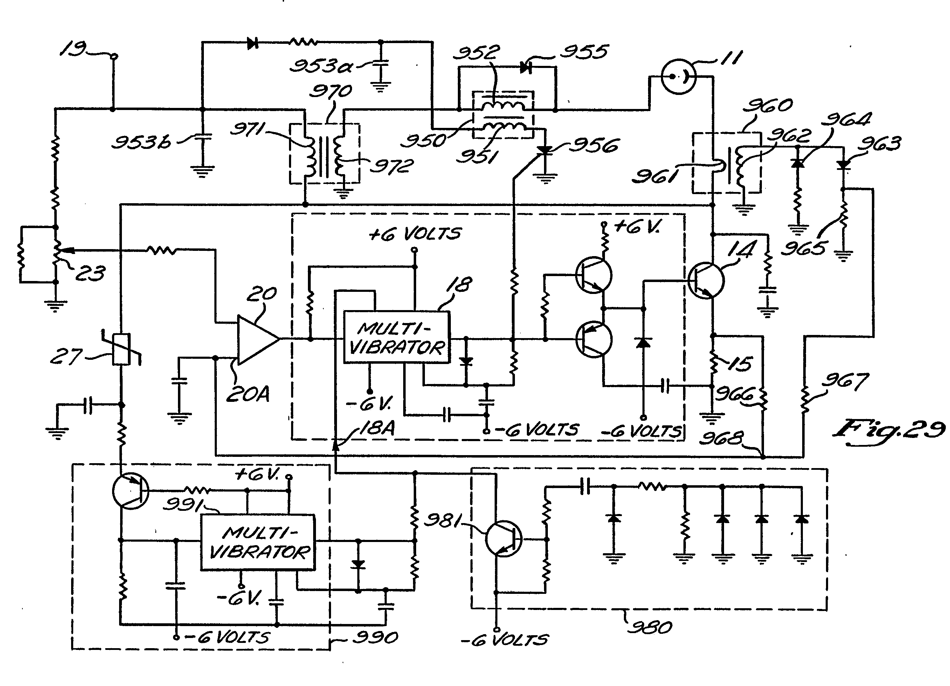

Figure 28 illustrates another embodiment of the invention in which the foregoing problems are solved. The current regulation circuit of Figure 28 comprises another transformer 960 connected in series with lamp 11 in a lamp control circuit similar to the lamp control circuit of Figure 1. In the circuit of Figure 28, the power consumed is independent of the equivalent resistance of the lamp 11. Therefore, if the lamp 11 in Figure 28 is a high pressure sodium lamp, the power consumed by the lamp control circuit will remain constant, even though the equivalent resistance of the lamp 11 may increase significantly.

The transformer 960 has its primary winding 961 connected in series with the lamp. Secondary winding 962 of the transformer 960 is wound to provide a reversed polarity with respect to the primary winding 961, so that the current flowing from the voltage source 16 through the lamp 11 while the transistor 14 is on produces a negative voltage and reverse current in the secondary winding 962. Isolation diodes 963 and 964 are provided on the ungrounded side of the secondary winding 962.

The negative voltage in the secondary winding 962 causes a negative voltage to appear across the resistor 965 which is proportional only to the current through the lamp 11. Resistors 966 and 967 are connected to form a summing node 968 for the voltage across resistor 965. As discussed above in connection with Figures 1 and 3, the voltage across the resistor 15 is a function of the current through both the lamp 11 and the inductor 17. This voltage is applied to summing node 968 through the summing node resistor 966. The negative voltage across resistor 965 is applied to summing node 968 through summing node resistor 967. The resistance values of resistors 15,965,966,967 are preferably selected so that the contribution to the voltage across resistor 15 by current through the lamp 11 is precisely nulled at the summing node 968 by the negative voltage across the resistor 965. As a result, the voltage at the summing node 968 applied to the negative input 20a of the comparator 20 is a function exclusively of the current through inductor 17, and is independent of the current through the lamp 11. As a result, the comparator amplifier 20 will control the multivibrator 18 and transistor 14 independently of changes in the equivalent resistance of the lamp 11.

Thus, the control circuit of Figure 28 does not increase the voltage applied to the lamp 11 as the lamp resistance increases. Therefore, the power consumed by the circuit of Figure 28 will not increase the lamp resistance as does the power consumed by the circuit of Figure 1.

The lamp control circuit illustrated in the detailed schematic diagram of Figure 29 includes a combination of the features discussed above in connection with Figures 1, 27, and 28. Thus, the circuit of Figure 29 has a basic lamp control circuit including a gas discharge lamp 11, a switching transistor 14, a resistor 15, a multivibrator 18, and a comparator 20. However, the inductor 17 of Figure 1 is replaced instead by a transformer 970 having primary and secondary windings 971, 972, respectively. The transformer 970 transforms the voltage from the voltage source 19 to the optimum operating voltage of the lamp 11. The basic lamp circuit including the lamp 11, the transistor 14, and the resistor 15, the multivibrator 18, the comparator 20, the potentiometer 23, and the transformer 970 operate in the manner described above in connection with the lamp control circuit of Figure 1.

The high ignition voltage circuit of Figure 27 is included in the circuit of Figure 29 as the pulse transformer 950 having its primary winding 951 connected to discharge capacitors 953a, 953b, and to controller 956. The diode 955 is connected across the secondary winding 952 in the circuit of Figure 29 and prevents the inductance of the secondary winding 952 from affecting the operation of the basic lamp control circuit, in the same manner as described above in connection with the pulse transformer circuit of Figure 27. The controller 956 is preferably a silicon controlled rectifier. The gate of the silicon controlled rectifier is connected to the multivibrator circuit 18. When the multivibrator circuit 18 turns the transistor 14 on, it simultaneously causes a voltage at the gate of the silicon controlled rectifier 956 to turn the silicon controlled rectifier 956 on. This completes the circuit between the discharge capacitors 953a, 953b, and the primary winding 951 of the pulse transformer 950. As described above in connection with Figure 27, this generates a 2500-volt ignition voltage across the secondary winding 952, which drives the lamp 11. After ignition of the lamp, even though the S.C.R. 956 continues to fire each time transistor 14 turns on, the 20-kHz switching frequency of transistor 14 prevents significant voltage from building up in capacitors 953a, 953b so that they no longer have any effect in the circuit.

The current regulation circuit described above in connection with Figure 28 is also present in the circuit of Figure 29, and includes the transformer 960 having its primary winding 961 connected in series with the lamp 11, and its secondary winding 962 wound with opposing polarity and connected through isolation diode 963 to resistor 965. Summing node 968 sums the voltage across resistor 15 through summing resistor 966 and the voltage across resistor 965 through summing resistor 967 and applies the resultant voltage to the input 20a of comparator 20. This current regulation circuit operates in the same manner described above in connection with the current regulation circuit of Figure 28.

The circuit of Figure 29 also includes a delay circuit 980 connected to shut-down input 18a of the multivibrator circuit 18. The delay circuit 980 shuts down the multivibrator circuit 18 by applying a signal to shut-down input 18a as soon as power is first applied from the voltage source 19 in order to allow the discharge capacitors 953a, 953b to have enough time to charge up to a sufficient voltage to ignite lamp 11. After a predetermined length of time, the delay circuit 980 no longer shuts down the multivibrator circuit 18, and the lamp control circuit of Figure 29 begins to operate. The metal oxide varistor 27 is connected to the collector transistor 14 in the same manner as described above in connection with Figure 1. However, a second shut-down circuit 990 is provided which shuts down the multivibrator circuit 18 for a predetermined length of time whenever the varistor 27 senses a high enough voltage across transistor 14 to break down. The low side of varistor 27 is connected to the input of the protective shut-down circuit 990. The output of the second shut-down circuit 990 is connected to the shut-down input 18a of multivibrator circuit 18. The second shut-down circuit 990 includes an astable multivibrator 991. Breakdown of the varistor 27 causes the multivibrator 991 to change state and issue a signal to the shut-down input 18, which holds the multivibrator circuit 18 shut down for a predetermined length of time determined by the duration of the astable state of the multivibrator 991.

This arrangement permits repeated pulses to be produced for starting the lamp if ionization is not complete after the first pulse, by allowing the capacitors 953a and 953b sufficient time to recharge. Again, after the capacitors 953a, 953b have recharged, the S.C.R. 956 again fires to cause a high voltage pulse across the lamp.

## Claims

1. A circuit for energising a gas discharge lamp having electromagnetic means (17) for storing magnetic energy connected in parallel combination with the electrodes of the gas discharge lamp (11), switch means (14) for connecting a power supply (16) to the parallel combination (11, 17) and control means (15, 20, 18) for controlling the switch means (14) so that current from the source (16) flows in one direction through the lamp (11) when the switch means (14) is in its on state and flows from the electromagnetic means (17) in the opposite direction through the lamp (11) when the switch means (14) is in its off state, the control means (15, 20, 18) including a current sensing device (15) for sensing the current flowing through said parallel combination (11, 17) and being constructed to actuate the switch means (14) responsively to the current sensed by the sensing device (15) to interrupt the connection of the power supply (16) to the parallel combination (11, 17) for a predetermined length of time $(T_A—T_o)$ whenever the current (Fig. 3C) flowing from the power supply (16) to the parallel combination has increased to a predetermined value characterised in that the control means (15, 20, 18) is constructed to trigger the switch means (14) to its off state responsively to the said predetermined current value being reached and to return the switch means (14) to its on state upon the elapse of a fixed length of time $(T_A—T_o)$ and in that the control means (15, 20, 18) includes means (23) for varying said predetermined current value at which the control means is triggered for varying the intensity of the light from the lamp (11).

2. A circuit as claimed in claim 1, in which the control means (15, 20, 18) includes a one-shot multivibrator (18) whose unstable state determines the said fixed length of time $(T_A—T_o)$ and which is arranged to be triggered into its unstable state by the sensed current reaching said predetermined value.

3. A circuit as claimed in claim 2, in which the sensing device (15) comprises a resistor connected in series with the switching means (14) and the means (23) for varying comprises an adjustable reference voltage source, and in which the control means (15, 20, 18) includes a comparator (20) for comparing the voltage across the resistor (15) with the adjusted reference voltage to trigger the multivibrator (20) when the resistor voltage reaches the reference voltage.

4. A circuit as claimed in claim 1, 2 or 3, further comprising protective means (27) connected across said switch means (14) for protecting said switch means against excessive voltages if said lamp (11) is removed or fails and becomes an open circuit.

5. A circuit as claimed in claim 4, further comprising a temperature sensing means (110) for sensing the temperature of said protective means (27) and operatively coupled to said control means (18, 20) to maintain said switch means (14) open when said protective means (27) exceeds a predetermined temperature (Figs. 6, 10, 12, 13).

6. A circuit as claimed in any of claims 1 to 5, in which the electromagnetic means comprises an autotransformer at least part of whose winding (59) is connected in parallel with the lamp electrodes and which provides a step-up or step-down voltage from the power supply (16) to said lamp (35). (Figs. 6, 10, 12, 13).

7. A circuit as claimed in any of claims 1 to 6, wherein said electromagnetic means comprises a transformer (37, 39 or 59, 60) at least a part of whose primary winding is connected in parallel with the lamp electrodes and whose secondary winding (43 or 61) supplies power to said control means (18, 20). (Figs. 5, 6, 10, 12, 13).

8. A circuit as claimed in any of claims 1 to 4, in which the control means further includes means (25) for varying said predetermined current value as a function of ambient illumination (Fig. 2).

9. A circuit as claimed in any of claims 1 to 4, in which the parallel combination includes several serially connected gas discharge lamps (28, 29) in parallel with the electromagnetic means (17), and in which a circuit component (33) is provided so that the required voltage supplied to the lamps by the circuit to ignite the lamps is effectively applied to each lamp in turn, whereby said required voltage is not increased above the voltage required in the circuit to ignite one of said gas discharge lamps. (Fig. 4).

10. A circuit as claimed in any of claims 1 to 7, which further comprises external conductor means (210) for increasing the voltage gradient inside said lamp during ignition of said gas discharge lamp. (Figs. 12 and 13).

11. A circuit as claimed in claims 3 and 10, wherein said electromagnetic means (59), said switching means (14) and said resistor (15) are connected in series across two terminals (215, 231) of the power supply (53) with said switching means (14) connected between said resistor (15) and said electromagnetic means (59), and wherein said external conductor means comprises a starting aid conductor (210) located adjacent said lamp and extending parallel to the gap between said two lamp electrodes (200, 201), said starting aid conductor being connected to one of the terminals (231) of the power supply.

12. A circuit as claimed in claims 6 and 11, wherein one electrode (201) of the lamp (35) is connected to that end (68) of the winding of the autotransformer to which said switching means (14) is also connected (Fig. 13).

13. A circuit as claimed in any of claims 1 to 4, further comprising symmetry corrective means (355, 370, 375, 380) connected to sense the difference between the time durations of current flow in the two said directions through said lamp (11), and also connected to vary the output of said power supply (300) in proportion to said difference (Figs. 15, 17).

14. A circuit as claimed in claim 13, wherein said power supply (300) comprises power oscillator means (615, 620, 625, 635) for generating said output of said power supply (300) and for maintaining a constant and exclusively resistive input impedance at a frequency lower than the frequency of said oscillator means. (Fig. 19).

15. A circuit as claimed in claim 13, further comprising shut-down protective means comprising voltage sensing means (27) for sensing voltage at said switching means and threshold means (470, 495, 505) responsive to said sensing means (27) for applying a voltage to said power oscillator means to arrest said oscillator means when the sensed voltage is above a predetermined voltage.

16. A circuit as claimed in any of claims 1 to 4, and 13 to 15, further comprising regulating means (400, 20) for changing said predetermined value of current flow to the parallel combination (11, 17) in response to changes in the output of said power supply (300), said regulating means maintaining a substantially constant current flow through said lamp independently of fluctuations in the output of said power supply. (Figs. 17, 24).

17. A circuit as claimed in claim 16, further comprising voltage limiting means (425) for limiting said predetermined value to a predetermined maximum value.

18. A circuit as claimed in any of claims 1 to 7, wherein said power supply comprises a rectified alternating current power supply (53) whose period is longer than said predetermined length of time, and wherein the control means (15, 20, 18) are constructed to vary the predetermined value of current flowing to the parallel combination (17, 35) at which the switch means (14) is actuated, in accordance with the voltage of said rectified AC power supply (53). (Figs. 7, 9, 10).

19. A circuit as claimed in claims 3 and 18, wherein said control means includes voltage responsive means (20) responsive not only to a rise in voltage across said resistor (15) but also to the output of said rectified AC power supply (53) for triggering said multivibrator (18) to said variable time output state.

20. A circuit as claimed in claim 19, wherein said voltage responsive means (20) is arranged to compare said rise in voltage and said rectified AC power supply output and to trigger said one-shot multivibrator (18) to said fixed time output state when said rise in voltage reaches a predetermined fraction of said rectified AC power supply output.

21. A circuit as claimed in claim 20, additionally comprising energy storing means (111, 113) for prohibiting the rectified AC voltage in said circuit from reaching a null.

22. A circuit as claimed in claim 21, wherein said energy storing means comprises a capacitor (111) connected to feed current to said lamp (35) when the voltage of said capacitor exceeds the voltage of said rectified AC power supply (53) and means (107) for charging said capacitor from said AC power supply (53).

23. A circuit as claimed in any of claims 1 to 4, further comprising means (950, 953) connected in series with said lamp (11) for inducing a high voltage igniting pulse on said lamp. (Figs. 26, 27, 29).

24. A circuit as claimed in claim 23, further comprising shunt means (955) for preventing the impedance of said high voltage means (950, 953) from affecting operation of said switch means (14), said control means (18, 20) and said lamp (11) upon ignition of said lamp. (Figs. 27, 29).

25. A circuit as claimed in any of claims 1 to 4, 23 and 24, further comprising means (960, 965, 968) for operating said switch means (14) and said control means (18, 20) independently of current through said lamp (11) for preventing increased lamp resistance from causing an increase in the power consumed from said supply. (Figs. 28, 29).

26. A circuit as claimed in claim 25, wherein said switch operating means (960, 965, 968) is effectively responsive to current through said electromagnetic means (17) exclusively.

**Patentansprüche**

1. Schaltung zur Energieversorgung einer Gasentladungslampe, mit einer elektromagnetischen Einrichtung (17) zur Speicherung magnetischer Energie, die in Parallelkombination an die Elektroden der Gasentladungslampe (11) angeschlossen ist, mit Schalteinrichtungen (14) zur Verbindung einer Stromversorgungsquelle (16) mit der Parallelkombination (11, 17) und Steuereinrichtungen (15, 20, 18) zur Steuerung der Schalteinrichtungen (14), so daß Strom von der Quelle (16) in einer Richtung durch die lampe (11) fließt, wenn die Schalteinrichtung (14) in ihrem eingeschalteten Zustand ist, und von der elektromagnetischen Einrichtung (17) in der entgegengesetzten Richtung durch die Lampe (11) fließt, wenn die Schalteinrichtung (14) im ausgeschalteten Zustand ist, wobei die Steuereinrichtung (15, 20, 18) eine Stromfühlervorrichtung (15) zur Erfassung des durch die Parallelkombination (11, 17) fließenden Stroms umfaßt, die derart aufgebaut ist, daß sie die Schalteinrichtung (14) in Abhängigkeit von dem durch die Fühlervorrichtung (15) erfaßten Strom betätigt, um die Verbindung der Stromversorgungsquelle (16) mit der Parallelkombination (11, 17) für eine vorbestimmte Zeitspanne ($T_A$—$T_0$) zu unterbrechen, wenn der Strom (Fig. 3C), der von der Stromversorgungsquelle (16) an die Parallelkombination fließt auf einen vorbestimmten Wert zugenommen hat, dadurch gekennzeichnet, daß die Steuereinrichtung (15, 20, 18) derart aufgebaut ist, daß sie die Schalteinrichtung (14) in ihren ausgeschalteten Zustand umsteuert, und zwar in Abhängigkeit davon, daß der vorbestimmte Stromwert erreicht ist, und die Schalteinrichtung (14) nach dem Verstreichen einer festgelegten Zeitspanne ($T_A$—$T_0$) in ihren eingeschalteten Zustand zurückführt, und daß die Steuereinrichtung (15, 20, 18) Mittel (23) zur Veränderung des vorbestimmten Stromwertes umfaßt, bei dem die Steuereinrichtung zur Veränderung der Intensität des Lichtes aus der Lampe (11) getriggert wird.

2. Schaltung nach Anspruch 1, bei der die Steuereinrichtung (15, 20, 18) einen monostabilen Multivibrator (18) umfaßt, dessen unstabiler Zustand die festgelegte Zeitspanne ($T_A$—$T_0$) bestimmt, und der derart angeordnet ist, daß er dadurch in seinen unstabilen Zustand getriggert wird, daß der abgefühlte Strom den vorbestimmten Wert erreicht.

3. Schaltung nach Anspruch 2, bei der die Fühlvorrichtung (15) einen Widerstand umfaßt, der in Reihe mit der Schalteinrichtung (14) angeschlossen ist, und die Mittel (23) zur Veränderung eine einstellbare Referenzspannungsquelle umfassen, und bei der die Steuereinrichtung (15, 20, 18) eine Komparator (20) aufweist, um die Spannung am Widerstand (15) mit der eingestellten Referenzspannung zu vergleichen, um den Multivibrator (20) zu triggern, wenn die Widerstandsspannung die Referenzspannung erreicht.

4. Schaltung nach Anspruch 1, 2 oder 3, bei der ferner Schutzeinrichtungen (27) vorgesehen sind, die über die Schalteinrichtung (14) angeschlossen sind, um die Schalteinrichtung gegen übermäßige Spannungen zu schützen, wenn die Lampe (11) entfernt wird oder ausfällt und dadurch der Stromkreis unterbrochen wird.

5. Schaltung nach Anspruch 4, ferner mit einer Temperaturfühleinrichtung (110) zu Abfühlung der Temperatur der Schutzeinrichtung (27), wobei diese Temperaturfühleinrichtung (110) wirkungsmäßig mit der Steuereinrichtung (18, 20) gekoppelt ist, um die Schalteinrichtung (14) offenzuhalten, wenn die Schutzeinrichtung (27) eine vorbestimmte Temperatur überschreitet (Fig. 6, 10, 12, 13).

6. Schaltung nach einem der Ansprüche 1 bis 5, in welcher die elektromagnetische Einrichtung einen Spartransformator umfaßt, wobei wenigstens ein Teil von dessen Wicklung (59) parallel mit dem Lampenelektroden geschaltet ist und eine aufwärts oder abwärts transformierte Spannung von der Stromversorgungsquelle (16) an die Lampe (35) liefert (Figuren 6, 10, 12, 13).

7. Schaltung nach einem der Ansprüche 1 bis 6, in der die elektromagnetische Einrichtung einen Transformator (37, 39 oder 59, 60) umfaßt, bei dem wenigstens ein Teil seiner Primärwicklung parallel an die Lampenelektroden angeschlossen ist und dessen Sekundärwicklung (43 oder 61) Energie an die Steuereinrichtung (18, 20) liefert (Figuren 5, 6, 10, 12, 13).

8. Schaltung nach einem der Ansprüche 1 bis 4, in der die Steuereinrichtung ferner Mittel (25) zur Veränderung des vorbestimmten Stromwertes als Funktion der Umgebungsbeleuchtung umfaßt (Fig. 2).

9. Schaltung nach einem der Ansprüche 1 bis 4, in welcher die Parallelkombination mehrere in Reihe geschaltete Gasentladungslampen (28, 29) umfaßt, die parallel zur elektromagnetischen Einrichtung (17) angeordnet sind, und in der eine Schaltungskomponente (33) vorgesehen ist, so daß die erforderliche, durch die Schaltung an die Lampen zur Zündung der Lampen gelieferte Spannung wirksam an jede Lampe angelegt ist, wodurch die erforderliche Spannung nicht über diejenige Spannung hinaus erhöht ist, die in der Schaltung zur Zündung einer der Gasentladungslampen erforderlich ist (Fig. 4).

10. Schaltung nach einem der Ansprüche 1 bis 7, in der ferner externe Leitermittel (210) vorgesehen sind, um den Spannungsgradienten innerhalb der Lampe während der Zündung der Gasentladungslampe zu erhöhen (Figuren 12 und 13).

11. Schaltung nach Anspruch 3 und 10, in der die elektromagnetische Einrichtung (59), die Schalteinrichtung (14) und der Widerstand (15) in Reihe zwischen zwei Anschlüssen (215, 231) der Stromversorgungsquelle (52) angeschlossen sind, wobei die Schalteinrichtung (14) zwischen dem Widerstand (15) und der elektromagnetischen Einrichtung (59) angeschlossen ist, und in der die externe Leitereinrichtung einen Starthilfeleiter (210) umfaßt, der angrenzend an die Lampe angeordnet ist und sich parallel zu dem Spalt zwischen den bilden Lampenelektroden (200, 210) erstreckt, wobei dieser Starthilfeleiter mit einem der Anschlüsse (231) der Stromversorgungsquelle verbunden ist.

12. Schaltung nach den Ansprüchen 6 und 11, in der eine Elektrode (201) der Lampe (35) mit demjenigen Ende (68) der Wicklung des Spartransformators verbunden ist, mit dem auch die Schalteinrichtung (14) verbunden ist (Fig. 13).

13. Schaltung nach einem der Ansprüche 1 bis 4, in der ferner eine Symmetrikorrektureinrichtung (355, 370, 375, 380) derart angeschlossen ist, daß sie den Unterschied zwischen den Zeitdauern des Stromflusses in den beiden Richtungen durch die Lampe (11) abfühlt, wobei diese Einrichtung überdies derart angeschlossen ist, daß der Ausgangswert der Stromversorgungsquelle (300) proportional zu diesem Unterschied verändert wird (Figuren 15, 17).

14. Schaltung nach Anspruch 13, in der die Stromversorgungsquelle (30) eine Leistungsoszillatoreinrichtung (615, 620, 625, 635) umfaßt, die den Ausgangswert der Stromversorgungsquelle (300) erzeugt und eine konstante und ausschließlich wirkwiderstandsmäßige Eingangsimpedanz bei einer Frequenz aufrechterhält, die geringer ist als die Frequenz der Oszillatoreinrichtung (Fig. 19).

15. Schaltung nach Anspruch 13, die ferner eine Abschalt-Schutzeinrichtung umfaßt, welche eine Spannungsfühlvorrichtung (27) aufweist, um die Spannung an der Schalteinrichtung abzufühlen, sowie eine Schwellwerteinrichtung (470, 495, 505), welche auf die Fühleinrichtung (27) anspricht, um eine Spannung an die Leistungsoszillatoreinrichtung anzulegen, so daß die Oszillatoreinrichtung festgehalten wird, wenn die erfühlte Spannung über einer vorbestimmten Spannung liegt.

16. Schaltung nach einem der Ansprüche 1 bis 4 und 13 bis 15, die ferner eine Reguliereinrichtung (400, 20) umfaßt, um den vorbestimmten Wert des Stromflusses zur Parallelkombination (11, 17) in Abhängigkeit von Änderungen in dem Ausgangswert der Stromversorgungsquelle (300) zu verändern, wobei diese Reguliereinrichtung einen im wesentlichen konstanten Stromfluß durch die Lampe unabhängig von Fluktuationen in dem Ausgangswert der Stromversorgungsquelle aufrechterhält (Figuren 17, 24).

17. Schaltung nach Anspruch 16, die ferner eine Spannungsbegrenzungseinrichtung (425) umfaßt, um den vorbestimmten Wert auf einen vorbestimmten Maximalwert zu begrenzen.

18. Schaltung nach einem der Ansprüche 1 bis 7, in der die Stromversorgungsquelle eine gleicherichtete Wechselstromversorgung (53) umfaßt, deren Periode länger ist als die vorbestimmte Zeitspanne, und in der die Steuereinrichtung (15, 20, 18) derart aufgebaut ist, daß sie den vorbestimmten Wert des Stromflusses zur Parallelkombination (17, 35), bei dem die Schalteinrichtung (14) aktiviert wird, entsprechend der Spannung der gleichgerichteten Wechselstromversorgung (53) variiert (Figuren 7, 9, 10).

19. Schaltung nach Anspruch 3 und 18, in der die Steuereinrichtung auf Spannung ansprechende Mittel (20) umfaßt, die nicht nur auf einen Anstieg der Spannung an dem Widerstand (15) anspricht, sondern auch auf den Ausgangswert der gleichgerichteten Wechselstromversorgung (53), um den Multivibrator (18) in den Ausgangszustand mit variabler Zeit zu triggern.

20. Schaltung nach Anspruch 19, in der die auf Spannung ansprechende Einrichtung (20) derart ausgebildet ist, daß sie den Anstieg der Spannung und den Ausgangswert der gleichgerichteten Wechselstromversorgung vergleicht und den monostabilen Multivibrator (18) in den Ausgangszustand mit festgelegter Zeit triggert, wenn der Spannungsanstieg einen vorbestimmten Bruchteil des Ausgangswerts der gleichgerichteten Wechselstromversorgung erreicht.

21. Schaltung nach Anspruch 20, die zusätzlich Energiespeichermittel (111, 113) umfaßt, um zu verhindern, daß die gleichgerichtete Wechselspannung in der Schaltung den Wert Null erreicht.

22. Schaltung nach Anspruch 21, in der die Energiespeichereinrichtung einen Kondensator (111) umfaßt, der derart angeschlossen ist, daß er Strom an die Lampe (35) liefert, wenn die Spannung des Kondensators die Spannung der gleichgerichteten Wechselstromversorgung (53) überschreitet, sowie Mittel (107) zur Aufladung des Kondensators aus der Wechselstromversorgung (53).

23. Schaltung nach einem der Ansprüche 1 bis 4, die ferner Mittel (950, 953) umfaßt, welche in Reihe mit der Lampe (11) geschaltet sind, um einen Hochspannungs-Zündimpuls an der Lampe zu induzieren (Figuren 26, 27, 29).

24. Schaltung nach Anspruch 23, die ferner Nehenschlußmittel (955) umfaßt, welche die Impedanz der Hochspannungsmittel (950, 953) daran hindert, den Betrieb der Schalteinrichtung (14) der Steuereinrichtung (18, 20) und der Lampe (11) beim Zünden der Lampe zu beeinträchtigen (Figuren 27, 29).

25. Schaltung nach einem der Ansprüche 1 bis 4, 23 und 24, die ferner Mittel (960, 965, 968) zur Betätigung der Schalteinrichtung (14) und der Steuereinrichtung (18, 20) umfaßt, und zwar unabhängig von einem Strom durch die Lampe (11), um zu verhindern, daß ein erhöhter Lampenwiderstand eine Zunahme der aus der Stromversorgungsquelle verbrauchten Leistung bewirkt (Figuren 28, 29).

26. Schaltung nach Anspruch 25, in der die Schalterbetätigungsmittel (960, 965, 968) tatsächlich ausschließlich auf den Strom durch die elektromagnetische Einrichtung (17) ansprechen.

**Revendications**

1. Un circuit destiné à alimenter une lampe à décharge dans un gaz comportant des moyens électromagnétiques (17) destinés à ammagasiner de l'énergie magnétique, connectés en parallèle avec les électrodes de la lampe à décharge dans un gaz (11), des moyens de commutation (14) destinés à connecter une alimentation (16) à la combinaison parallèle (11, 17) et des moyens de commande (15, 20, 18) destinés à commander les moyens de commutation (14) de façon qu'un courant provenant de la source (16) circule dans la lampe (11) dans une première direction lorsque les moyens de commutation (14) sont dans leur état conducteur, et circule dans la lampe (11) à partir des moyens électromagnétiques (17) dans la direction opposé lorsque les moyens de commutation (14) sont dans leur état bloqué, les moyens de commande (15, 20, 18) comprenant un dispositif de détection de courant (15) destiné à détecter le courant qui circule dans la combinaison parallèle (11, 17), et construit de manière à actionner les moyens de commutation (14) sous la dépendance du courant détecté par le dispositif de détection (15) afin d'interrompre la connexion de l'alimentation (16) à la combinaison parallèle (11, 17) pendant une durée prédéterminée

($T_A$—$T_O$) chaque fois que le courant (figure 3C) qui circule de l'alimentation (16) vers la combinaison parallèle a augmenté jusqu'à une valeur prédéterminée, caractérisé en ce que les moyens de commande (15, 20, 18) sont réalisés de façon à faire passer les moyens de commutation (14) à leur état bloqué lorsque le courant de valeur prédéterminée est atteint, et à ramener les moyens de commutation (14) à leur état conducteur à l'expiration d'un durée fixe ($T_A$—$T_O$), et en ce que les moyens de commande (15, 20, 18) comprennent des moyens (23) destinés à faire varier la valeur de courant prédéterminée à laquelle les moyens de commande sont déclenchés, pour faire varier l'intensité de la lumière émise par la lampe (11).

2. Un circuit selon la revendication 1, dans lequel les moyens de commande (15, 20, 18) comprennent un multivibrateur monostable (18) dont l'état instable détermine ladite durée fixe ($T_A$—$T_O$) et qui est conçu de façon à être commuté vers son état instable par le fait que le courant détecté atteint la valeur prédéterminée.

3. Un circuit selon la revendication 2, dans lequel le dispositif de détection (15) comprend une résistance connectée en série avec les moyens de commutation (14), et les moyens de variation (23) comprennent une source de tension de référence réglable, et dans lequel les moyens de commande (15, 20, 18) comprennent un comparateur (20) destiné à comparer la tension aux bornes de la résistance (15) avec la tension de référence réglée, pour déclencher le multivibrateur (20) lorsque la tension aux bornes de la résistance atteint la tension de référence.

4. Un circuit selon la revendication 1, 2 ou 3, comprenant en outre des moyens de protection (27) connectés aux bornes de moyens de commutation (14), pour protéger ces moyens de commutation contre des tensions excessives si la lampe (11) est enlevée ou tombe en panne et présente un circuit ouvert.

5. Un circuit selon la revendication 4, comprenant en outre des moyens de détection de température (110) destinés à détecter la température des moyens de protection (27) et connectés fonctionnellement aux moyens de commande (18, 20) pour maintenir les moyens de commutation (14) ouverts lorsque la température des moyens de protection (27) dépasse une température prédéterminée. (Figures 6, 10, 12, 13).

6. Un circuit selon l'une quelconque des revendications 1 à 5, dans lequel les moyens électromagnétiques comprennent un autotransformateur dont une partie au moins de l'enroulement (59) est connectée en parallèle avec les électrodes de la lampe, et qui applique à la lampe (35) une tension augmentée ou abaissée à partir de l'alimentation (16). (Figures 6, 10, 12, 13).

7. Un circuit selon l'une quelconque des revendications 1 à 6, dans lequel les moyens électromagnétiques comprennent un transformateur (37, 39 ou 59, 60) dont une partie au moins de l'enroulement primaire est connectée en parallèle avec les électrodes de la lampe, et dont l'enroulement secondaire (43 ou 61) alimente les moyens de commande (18, 20). (Figures 5, 6, 10, 12, 13).

8. Un circuit selon l'une quelconque des revendications 1 à 4, dans lequel les moyens de commande comprennent en outre des moyens (25) destinés à faire varier la valeur de courant prédéterminée en fonction de l'éclairage ambiant. (Figure 2).

9. Un circuit selon l'une quelconque des revendications 1 à 4, dans lequel la combinaison parallèle comprend plusieurs lampes à décharge dans un gaz connectées en série (28, 29), en parallèle sur les moyens électromagnétiques (17), et dans lequel il existe un composant de circuit (33) conçu de façon que la tension exigée que le circuit applique aux lampes pour les amorcer soit effectivement appliquée tour à tour à chaque lampe, grâce à quoi la tension exigée n'est pas augmentée au-delà de la tension exigée dans le circuit pour amorcer l'une des lampes à décharge dans un gaz. (Figure 4).

10. Un circuit selon l'une quelconque des revendications 1 à 7, comprenant en outre des moyens conducteurs externes (210) destinés à augmenter le gradient de tension à l'intérieur de la lampe pendant l'armorçage de ladite lampe à décharge dans un gaz. (Figures 12 et 13).

11. Un circuit selon les revendications 3 et 10, dans lequel les moyens électromagnétiques (59), les moyens de commutation (14) et la résistance (15) sont connectés en série entre deux bornes (215, 231) de l'alimentation (53), avec les moyens de commutation (14) connecfes entre la résistance (15) et les moyens électromagnétiques (59), et dans lequel les moyens conducteurs externes comprennent un conducteur d'aide à l'amorçage (210) qui est placé en position adjacente à la lampe et s'étend parallèlement à l'espace situé entre les deux électrodes (200, 201) de la lampe, et ce conducteur d'aide à l'amorçage est connecté à l'une des bornes (231) de l'alimentation.

12. Un circuit selon les revendications 6 et 11, dans lequel une électrode (201) de la lampe (35) est connectée à l'extrémité (68) de l'enroulement de l'autotransformateur à laquelle les moyens de commutation (14) sont également connectés (figure 13).

13. Un circuit selon l'une quelconque des revendications 1 à 4, comprenant en outre des moyens de correction de symétrie (355, 370, 375, 380) qui sont connectés de façon à détecter la différence entre les durées de circulation du courant dans les deux directions dans la lampe (11), et qui sont également connectés de façon à faire varier la puissance de sortie de l'alimentation (300) proportionnellement à cette différence (figures 15, 17).

14. Un circuit selon la revendication 13, dans lequel alimentation (300) comprend un oscillateur de puissance (615, 620, 625, 635) destiné à générer la puissance de sortie de l'alimentation (300) et à maintenir une impédance d'entrée constante et exclusivement résistive à une fréquence inférieure à la fréquence de cet oscillateur. (Figure 19).

15. Un circuit selon la revendication 13, comprenant en outre des moyens de protection capables d'interrompre le fonctionnement qui comprennent des moyens de détection de tension (27) destinés à détecter la tension au niveau des moyens de commutation, et des moyens à seuil (470, 495, 505) qui fonctionnent sous la dépendance des moyens de détection (27) en appliquant une tension à l'oscillateur de puissance pour arrêter cet oscillateur lorsque la tension détectée est supérieure à une tension prédéterminée.

16. Un circuit selon l'une quelconque des revendications 1 à 4 et 13 à 15, comprenant en outre des moyens de régulation (400, 20) destinés à changer la valeur prédéterminée du courant circulant vers la combinaison parallèle (11, 17), sous l'effet de changements de la puissance de sortie de l'alimentation (300), ces moyens de régulation maintenant un courant pratiquement constant dans la lampe, indépendamment des fluctuations de la puissance de sortie de l'alimentation. (Figures 17, 24).

17. Un circuit selon la revendication 16, comprenant en outre des moyens de limitation de tension (425) destinés à limiter la valeur prédéterminée à une valeur maximale prédéterminée.

18. Un circuit selon l'une quelconque des revendications 1 à 7, dans lequel l'alimentation consiste en une alimentation à courant alternatif redressé (53) dont la période est supérieure à ladite durée prédéterminée, et dans lequel les moyens de commande (15, 20, 18) sont réalisés de façon à faire varier la valeur prédéterminée du courant circulant vers la combinaison parallèle (17, 35), à laquelle les moyens de commutation (14) sont actionnés, conformément à la tension de l'alimentation à courant alternatif redressé (53). (Figures 7, 9, 10).

19. Un circuit selon les revendications 3 et 18, dans lequel les moyens de commande comprennent des moyens sensibles à la tension (20) qui réagissent non seulement à une élévation de la tension aux bornes de la résistance (15), mais également à la tension de sortie de l'alimentation à courant alternatif redressé (53), en déclenchant le multivibrateur (18) de façon à le faire passer dans l'état de sortie à durée variable.

20. Un circuit selon la revendication 19, dans lequel les moyens sensibles à la tension (20) sont conçus de façon à comparer ladite élévation de tension et la tension de sortie de l'alimentation à courant alternatif redressé, et à déclencher le multivibrateur monostable (18) pour le faire passer dans l'état de sortie à durée fixe lorsque l'élévation de tension atteint une fraction prédéterminée de la tension de sortie de l'alimentation à courant alternatif redressé.

21. Un circuit selon la revendication 20, comprenant de plus des moyens de stockage d'énergie (111, 113), destinés à empêcher que la tension alternative redressée dans le circuit n'atteigne une valeur nulle.

22. Un circuit selon la revendication 21, dans lequel les moyens de stockage d'énergie comprennent un condensateur (111) connecté de façon à fournir du courant à la lampe (35) lorsque la tension de ce condensateur dépasse la tension de l'alimentation à courant alternatif redressé (53), et des moyens (107) destinés à charger ce condensateur à partir de l'alimentation à courant alternatif redressé (53).

23. Un circuit selon l'une quelconque des revendications 1 à 4, comprenant en outre des moyens (950, 953) connectés en série avec la lampe (11) de façon à induire dans la lampe une impulsion d'amorçage à tension élevée. (Figures 26, 27, 29).

24. Un circuit selon la revendication 23, comprenant en outre des moyens branchés en shunt (955) destinés à empêcher que l'impédance des moyens à tension élevée (950, 953) n'affecte le fonctionnement des moyens de commutation (14), des moyens de commande (18, 20) et de la lampe (11) au moment de l'amorçage de cette lampe. (Figures 27, 29).

25. Un circuit selon l'une quelconque des revendications 1 à 4, 23 et 24, comprenant en outre des moyens (960, 965, 968) destinés à faire fonctionner les moyens de commutation (14) et les moyens de commande (18, 20) indépendamment du courant qui circule dans la lampe (11), pour empêcher qu'une résistance accrue de la lampe ne produise une augmentation de la puissance consommée fournie par l'alimentation. (Figures 28, 29).

26. Un circuit selon la revendication 25, dans lequel les moyens (960, 965, 968) destinés à faire fonctionner les moyens de commutation réagissent effectivement de façon exclusive au courant traversant les moyens électromagnétiques (17).

FIG. 1

FIG. 2.

1

Fig. 3A

LAMP CURRENT

A  B

$T_O$  $T_A$  $T_B$  $T_O$  $T_A$  $T_B$  TIME

Fig. 3B

CHOKE CURRENT

$I_A$  $I_B$

A  B

$T_O$  $T_A$  $T_B$  $T_O$  $T_A$  $T_B$  TIME

Fig. 3C

TRANSISTOR SWITCH COLLECTOR CURRENT

A  B

$T_O$  $T_A$  $T_B$  $T_O$  $T_A$  $T_B$  TIME

Fig. 3D

LAMP VOLTAGE

$T_O$  $T_A$  $T_B$  $T_O$  $T_A$  $T_B$  TIME

SETTING "X" OF POTENTIOMETER 23

SETTING "Y" OF POTENTIOMETER 23

2

*Fig. 4*

*Fig. 5*

FIG.6.

0 016 756

Fig.10

Fig. 7

0 016 756

Fig.8A

Fig.8B

Fig.9

6

Fig. 11A

Fig. 11B

121  121

Fig. 11C

123  123

123

Fig. 12

Fig. 13

0 016 756

*Fig. 14*

Fig.15

Fig.17

Fig.15

Fig.17

Fig. 16A

Fig. 16C

Fig. 16B

Fig. 16D

Fig. 16E

Fig. 16F

*Fig. 18*

DIVIDER 400

POWER OSCILLATOR

CURRENT CONVERTER  *Fig. 19*

Fig. 20A

Fig. 20B

Fig. 20C

Fig. 20D

Fig. 20E

$I_{IN}$ RECTIFIED INPUT CURRENT

TIME

$T_0$

Fig. 21A

TRANSISTOR COLLECTOR VOLTAGE

TRANSISTOR ON    OFF    ON    OFF

TIME

$T_0$    $T_1$    $T_2$

Fig. 21B

VOLTAGE

$V_D$    $V_{620}$

$V_{720}$

TIME

$T_0$

Fig. 21C

VOLTAGE

$V_B$    $V_A$

TIME

Fig. 21D

$I_{615}$    $I_{IN}$

$I_{620}$

TIME

Fig. 21E

TRANSISTOR CURRENT

TIME

Fig. 21F

DIODE CURRENT

TIME

Fig. 21G

Fig. 22

Fig. 23

Fig.24A

755 660 625 600A 900 901 755 635 903A 680 630 850 740 355B 620 720 650 610 605 615 +6V -6V 12V +6V -6V

Fig. 24B

0 016 756

Fig. 25

Fig.26

Fig.27

Fig.28

20

Fig.29